# EUROPEAN PATENT APPLICATION

(11) **EP 4 464 812 A2**
(43) Date of publication of application: **20.11.2024**
(21) Application number: 24176043.8
(22) Date of filing: 15.05.2024
(51) Int. Cl.: C22C 38/44, C22C 38/46, C22C 38/42, C22C 38/02, C22C 38/04, C22C 38/06, C22C 38/00, C22C 38/48, C22C 38/50, C22C 38/52, C22C 38/54, C21D 1/18, C21D 9/00

(54) **STEEL MATERIAL AND MOLD**

(30) Priority: 18.05.2023 JP 2023082279
(71) Applicant: Daido Steel Co., Ltd., Nagoya-shi Aichi 461-8581 (JP)
(72) Inventor: KAWANO, Masamichi, Nagoya-shi, Aichi, 457-8545 (JP)
(74) Representative: Diehl & Partner

(57) **Abstract**

The present invention relates to a steel material including: 0.23 mass% ≤ C ≤ 0.39 mass%; 0.03 mass% ≤ V ≤ 0.30 mass%; 6.60 mass% ≤ Mn + Cr ≤ 7.40 mass%; Mn/Cr ≤ 0.150; Mn ≥ 0.60 mass%; Cr ≤ 6.60 mass%; Cu + Ni ≤ 0.84 mass%; 0.01 mass% ≤ Si ≤ 0.40 mass%; 2.00 mass% ≤ Mo ≤ 3.50 mass%; 0.001 mass% ≤ Al ≤ 0.080 mass%; and 0.003 mass% ≤ N ≤ 0.040 mass%, with the balance being Fe and unavoidable impurities.

## Description

### TECHNICAL FIELD

The present invention relates to a steel material and a mold, and more particularly to a steel material suitable for producing a mold having a large mass and a large size, and a mold using the same.

### BACKGROUND ART

Since stress and heat repeatedly act on a mold during use, a steel material for the mold is required to be excellent in a plurality of properties such as hardness, impact resistance, heat-check resistance, and wear resistance. Therefore, various proposals have been made in the related art regarding a steel material having such properties.

For example, Patent Literature 1 discloses a hot working tool steel including predetermined contents of C, Si, Mn, Cr, Mo, and V, with the balance being Fe and unavoidable impurities.

A manufacturing process of a mold includes a hardening and tempering (HT) method and a pre-hardening (PH) method. The HT method is a method of imparting hardness and toughness required for a mold "after" machining. On the other hand, the PH method is a method of imparting hardness and toughness required for a mold "before" machining.

In the case where the mold is manufactured using either one of the HT method and the PH method, the larger the size of the mold is, the more easily heat check and large crack are generated. It is considered that this is because a cooling rate during quenching decreases as the size of the mold increases, and a high-temperature strength and toughness of the steel material decrease. This is also because the larger the size of the mold, the larger a thermal stress and a mechanical stress acting on the mold in use.

On the other hand, a steel material which hardly causes a heat check or a large crack is generally low in manufacturability (SA (spheroidizing annealing) property, machinability) in many cases. Further, there has not been proposed an example of a steel material capable of preventing a heat check or a large crack without significantly impairing manufacturability even when applied to a mold having a large size.

Patent Literature 1: JP2011-001572A

### SUMMARY OF INVENTION

An object of the present invention is to provide a steel material capable of manufacturing a mold excellent in durability (heat-check resistance and/or large-crack resistance) without significantly impairing manufacturability (SA property and/or machinability).

In order solve to the above-mentioned problems, the steel material according to the present invention includes:
0.23 mass% ≤ C ≤ 0.39 mass%;
0.03 mass% ≤ V ≤ 0.30 mass%;
6.60 mass% ≤ Mn + Cr ≤ 7.40 mass%;
Mn/Cr ≤ 0.150;
Mn ≥ 0.60 mass%;
Cr ≤ 6.60 mass%;
Cu + Ni ≤ 0.84 mass%;
0.01 mass% ≤ Si ≤ 0.40 mass%;
2.00 mass% ≤ Mo ≤ 3.50 mass%;
0.001 mass% ≤ Al ≤ 0.080 mass%; and
0.003 mass% ≤ N ≤ 0.040 mass%,
with the balance being Fe and unavoidable impurities.

The mold according to the present invention is manufactured from the steel material according to the present invention and has a mass of 2000 kg or more.

In the present invention, a content of Si and a content of Mo are optimized in a low-Si and high-Mo steel material, so that even when a mass or a size of the steel material is large, a large crack and a heat check can be prevented.

### BRIEF DESCRIPTION OF DRAWINGS

FIG. 1 is a schematic diagram of effects obtained by increasing a content of Mo and decreasing a content of Si.
FIG. 2 is a graph showing ranges of a content of Mn and a content of Cr for obtaining a steel material excellent in SA property and quenchability.
FIG. 3 is a graph showing a relation between an amount of retained austenite and the content of Mo.
FIG. 4 is a graph showing a relation between a creep rupture time and the content of Mo.
FIG. 5 is a graph showing a relation between fracture toughness and the content of Si.
FIG. 6 is a graph showing a relation between high-temperature tensile strength and the content of Si.
FIG. 7 is a graph showing a relation between softening resistance and the content of Si.
FIG. 8 is a graph showing a relation between a critical cooling rate of pearlite precipitation and the content of Si.
FIG. 9 is a graph showing temperature transition of a center portion of a block during rapid cooling.
FIG. 10 is a graph showing quenching simulation of a 12.5-ton block of SKD61.

Hereinafter, an embodiment of the present invention will be described in detail.

### 1. Steel Material

### 1.1. Composition

### 1.1.1. Main Constituent Element

A steel material according to the present invention includes the following elements, with the balance being Fe and unavoidable impurities. Types of added elements, component ranges thereof, and reasons for limitation thereof are as follows.

### (1) 0.23 mass% ≤ C ≤ 0.39 mass%:

Fine particles (carbides, carbonitrides) having a diameter of 0.5 µm or less function as "pinning particles" that prevent growth of austenite crystal grains during heating for quenching. In the case where a content of C is too small, an amount of the pinning particles becomes insufficient during heating for quenching. As a result, crystal grains may be coarsened, and steel material properties such as an impact value, a fracture toughness value, and ductility may be deteriorated.

In the case where the content of C is too small, a martensite transformation start temperature (an Ms point) becomes excessively high. As a result, quenchability is increased, but the impact value may be decreased.

Further, in the case where the content of C is too small, it is difficult to obtain a hardness of 45 HRC or more by tempering at 560°C to 600°C. In order to ensure high heat-check resistance, a hardness of 45 HRC or more is required. When the content of C is too small, the softening resistance decreases. Therefore, even if a hardness of 45 HRC or more is obtained after quenching and tempering, the hardness decreases during use as a mold, and a tensile strength at a high temperature may decrease. In this case, (2) and (3) in Table 1 described later cannot be satisfied.

Therefore, the content of C needs to be 0.23 mass% or more. The content of C is preferably 0.25 mass% or more, and more preferably 0.27 mass% or more.

On the other hand, in the case where the content of C is excessive, coarse carbides or carbonitrides may be crystallized during casting. These crystallized matters become "foreign matters" that reduce the impact value. Therefore, (4) in Table 1 described later is required. It is difficult to dissolve and eliminate the coarse foreign matters by heat treatment (homogenization heat treatment, normalizing, and spheroidizing annealing). The coarse foreign matters often remain without being completely dissolved even after quenching and tempering. The coarse foreign matters are dissolved and reduced in size during the homogenization heat treatment, but is still observed with a diameter exceeding 5 µm. The foreign matters that remain without being completely dissolved become a starting point of fracture and causes a decrease in the impact value and fatigue strength.

Further, in the case where an ingot is formed into a block-shaped or bar-shaped steel material by hot working, when a cooling rate after the hot working is low, the impact value may be decreased. In the case where the content of C is excessive, this phenomenon becomes conspicuous. This is because of carbides or carbonitrides precipitated in austenite grain boundaries during cooling after the hot working. These precipitates also serve as the "foreign matters" that reduce the impact value, as in the case of the above-described crystallized product. Therefore, (4) in Table 1 described later is required. These precipitates are not completely dissolved even by various kinds of heat treatment after hot working, and finally remain in the quenched and tempered structure.

Although the precipitates are not large and are 10 µm or less, a plurality of precipitates are distributed in a dot array at intervals to form a necklace state. A "necklace diameter (a maximum length of a region in which the plurality of precipitates are distributed in a dot array at intervals)" corresponds to a coarse austenite crystal grain size after hot working. Since the size of coarse prior austenite grain becomes a unit of a fracture surface, the impact value and the fracture toughness deteriorate.

Therefore, the content of C needs to be 0.39 mass% or less. The content of C is preferably 0.38 mass% or less, more preferably 0.37 mass% or less, and still more preferably 0.34 mass% or less.

### (2) 0.03 ≤ V ≤ 0.30 mass%:

V is bonded to C and/or N in a steel to form a carbide, a carbonitride, and/or a nitride. All these function as the pinning particles. See (5) in Table 1 described later. Therefore, in the case where a content of V is too small, the amount of pinning particles is insufficient during heating for quenching.

In the case where the content of V is too small, a degree of secondary hardening during tempering is decreased. As a result, during tempering at 560°C to 600°C, it is difficult to obtain a hardness of 45 HRC or more. Since the softening resistance is decreased, even if a hardness of 45 HRC or more is obtained after quenching and tempering, the hardness may decrease during use as a mold, and a high-temperature tensile strength may decrease. See (2) in Table 1 described later.

Therefore, the content of V needs to be 0.03 mass% or more. The content of V is preferably 0.05 mass% or more, more preferably 0.07 mass% or more, and still more preferably 0.12 mass% or more.

On the other hand, in the case where the content of V is excessive, the coarse foreign matters are increased. As described above, the "foreign matter" refers to a crystallized product crystallized during casting or a precipitate precipitated during cooling after hot working. Therefore, (4) in Table 1 described later is required.

Therefore, the content of V needs to be 0.30 mass% or less. The content of V is preferably 0.29 mass% or less, more preferably 0.28 mass% or less, and still more preferably 0.25 mass% or less.

### (3) 6.60 mass% ≤ Mn + Cr ≤ 7.40 mass%:

Both Mn and Cr affect the quenchability. In the case where a content of Mn + Cr is too small, the quenchability is insufficient. As a result, particularly inside a large mold (a region in which a quenching rate is low), the impact value may be significantly decreased. Therefore, the content of Mn + Cr needs to be 6.60 mass% or more. The content of Mn + Cr is preferably 6.65 mass% or more, and more preferably 6.70 mass% or more.

On the other hand, in the case where the content of Mn + Cr is excessive, thermal conductivity is significantly decreased. As a result, heat-check resistance is deteriorated due to an increase in thermal stress. Therefore, the content of Mn + Cr needs to be 7.40 mass% or less. The content of Mn + Cr is preferably 7.35 mass% or less, and more preferably 7.30 mass% or less.

### (4) Mn/Cr ≤ 0.150:

A ratio (Mn/Cr) of a mass of Mn to a mass of Cr included in the steel affects an SA property. In the case where Mn/Cr is too large, the SA property is deteriorated. Therefore, in order to soften the steel material to 98 HRB or less in SA at a heating temperature exceeding an A_{c3} point, the cooling rate needs to be less than 10°C/hour. As a result, an SA step becomes longer, and productivity is decreased. In the case where the crystal grains are coarse and Mn/Cr is large, an SA failure is likely to occur. SA also has an effect of avoiding austenite memory described later. Therefore, when the SA failure occurs, it may be difficult to form fine grains during quenching.

Therefore, Mn/Cr needs to be 0.150 or less. Mn/Cr is preferably 0.148 or less, and more preferably 0.145 or less.

### (5) Mn ≥ 0.60 mass%:

Mn affects the quenchability. In the case where a content of Mn is too small, the quenchability is deteriorated. In order to ensure the quenchability in the case where the content of Mn is small, it is necessary to increase a content of Cr. However, when the content of Cr is excessive, problems described later may become apparent.

Therefore, the content of Mn needs to be 0.60 mass% or more. The content of Mn is preferably 0.62 mass% or more, more preferably 0.65 mass% or more, and still more preferably 0.69 mass% or more. The content of Mn is preferably 0.90 mass% or less.

### (6) Cr ≤ 6.60 mass%:

In the case where the content of Cr is excessive, softening resistance is decreased. That is, a mold surface that is in contact with a molten metal during use as a die casting mold is heated to a high temperature, and the mold surface heated to a high temperature is likely to be softened. In the case where high-temperature strength is decreased due to the softening, the heat-check resistance is also deteriorated. Softening of a region with a hardness exceeding a maximum value is remarkable, and it is difficult to adjust tempering hardness. This is because hardness is sensitive to a change in furnace temperature.

In the case where the content of Cr is excessive, the thermal conductivity is decreased. As a result, a thermal stress is increased and the heat-check resistance is deteriorated. Further, in the case where a content of Si is 0.50 mass% or less, when the content of Cr is increased, machinability is significantly decreased.

Therefore, the content of Cr needs to be 6.60 mass% or less. The content of Cr is preferably 6.55 mass% or less, more preferably 6.50 mass% or less, and still more preferably 6.40 mass% or less. The content of Cr is preferably 6.00 mass% or more.

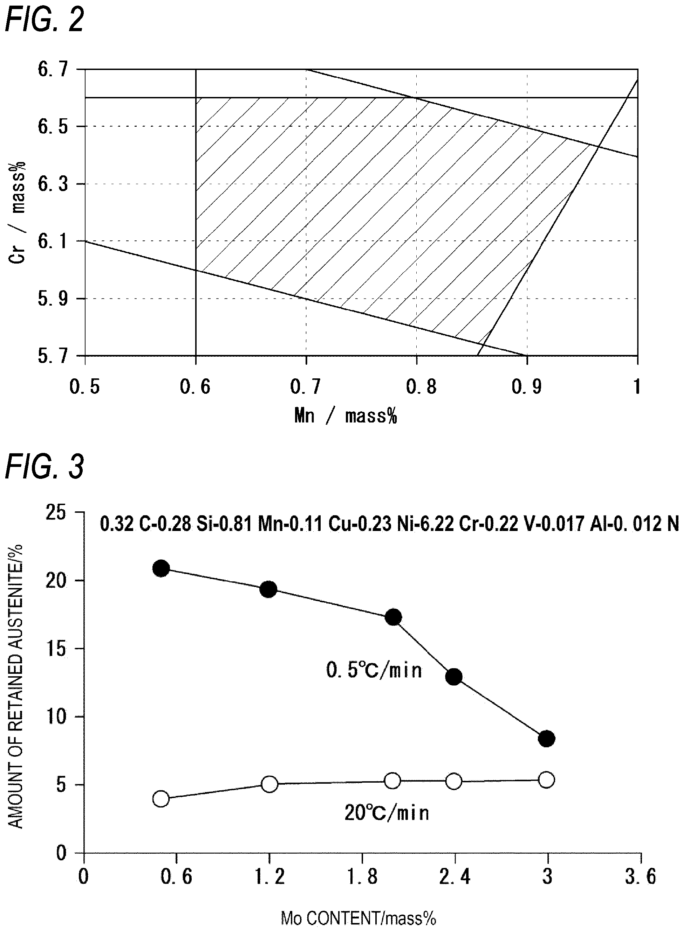

As described above, by optimizing the content of Mn + Cr, Mn/Cr, the content of Mn, and the content of Cr, a finer structure can be achieved. See (5) in Table 1 described later and FIG. 2.

### (7) Cu + Ni ≤ 0.84 mass%:

In the present invention, as described above, the SA property, the quenchability, and the softening resistance are ensured by the balance between Cr and Mn (the content of Cr, the content of Mn, the content of Mn + Cr, and Mn/Cr ratio). On the other hand, Cu and Ni both have an effect of improving the quenchability, but deteriorate the SA property. Further, Cu and Ni do not significantly affect the softening resistance, but rather have a noticeable negative effect on the SA property. In the case where a content of Cu is more than a content of Ni, hot workability is deteriorated. Therefore, a total content of Cu and Ni is defined, and an upper limit of the total content is defined within a range in which the influence on the quenchability or the SA property is small.

Therefore, the content of Cu + Ni needs to be 0.84 mass% or less. Since the content of Mn + Cr for ensuring the quenchability is 6.60 mass% or more, it is clear that the quenchability is not significantly affected in the case where the content of Cu + Ni is 0.84 mass% or less. The content of Cu + Ni is preferably 0.78 mass% or less, and more preferably 0.72 mass% or less. The content of Cu + Ni is preferably 0.10 mass% or more.

### (8) 0.01 mass% ≤ Si ≤ 0.40 mass%:

In the case where the content of Si is too small, machinability is decreased, and it is difficult to industrially and stably perform machining on a large mold. Especially, since the steel material of the present invention is intended for manufacturing a large mold, the amount to be cut is large, and good machinability is required. Therefore, the content of Si needs to be 0.01 mass% or more. The content of Si is preferably 0.03 mass% or more, more preferably 0.05 mass% or more, and sill more preferably 0.15 mass% or more.

On the other hand, in the case where the content of Si is excessive, coarse foreign matters may increase. This tendency is apparent when a content of C, a content of V, and a content of N are large. Pearlite is easily precipitated during cooling of quenching. Further, in the case where the content of Si is excessive, the thermal conductivity is obviously decreased. Therefore, the content of Si needs to be 0.40 mass% or less. The content of Si is preferably 0.37 mass% or less, more preferably 0.35 mass% or less, and still more preferably 0.33 mass% or less.

### (9) 2.00 mass% ≤ Mo ≤ 3.50 mass%:

In the case where a content of Mo is too small, pearlite is easily precipitated during cooling of quenching. A degree of secondary hardening during tempering also decreases. Therefore, in the case where the content of Mo is too small, it is difficult to obtain a hardness of 45 HRC or more during tempering at 560°C to 600°C. In addition, softening resistance and high-temperature strength may be insufficient, and heat-check resistance may be deteriorated. Further, when a quenching rate is low, an amount of retained austenite increases. In the case where the content of Mo is too small, the creep strength also decreases. Therefore, the content of Mo needs to be 2.00 mass% or more. The content of Mo is preferably 2.05 mass% or more, more preferably 2.10 mass% or more, and still more preferably 2.30 mass% or more.

On the other hand, in the case where the content of Mo is excessive, machinability is decreased. Especially, in the case where the content of Si is small, when the content of Mo is excessive, the machinability is significantly decreased. In the case where the content of Mo is excessive, fracture toughness may be decreased. This tendency is apparent in the case where the content of Si is large. Therefore, the content of Mo needs to be 3.50 mass% or less. The content of Mo is preferably 3.40 mass% or less, more preferably 3.25 mass% or less, and still more preferably 3.10 mass% or less.

### (10) 0.001 mass% ≤ Al ≤ 0.080 mass%:

In the steel material according to the present invention, the content of C and the content of V are much smaller than those of hot working die steel (SKD61 in accordance with JIS G 4404:2015) in the related art. Therefore, contents of V-based carbides, carbonitrides, and nitrides serving as pinning particles during heating for quenching are smaller than those of SKD61. Therefore, in the present invention, AlN particles are also used to prevent the growth of the austenite crystal grains. See (5) in Table 1 described later.

In the case where a content of Al is too small, it is difficult to reduce oxygen during refining, and the amount of oxides is increased, which may decrease the impact value. In the case where the content of Al is too small, an amount of AlN serving as the pinning particles is insufficient. As a result, the austenite crystal grains may be coarsened during heating for quenching, and impact value, fracture toughness, and/or ductility may be decreased. Therefore, the content of Al needs to be 0.001 mass% or more. The content of Al is preferably 0.002 mass% or more, and more preferably 0.003 mass% or more.

On the other hand, in the case where the content of Al is excessive, coarse alumina particles may be increased, and the impact value and fatigue strength may be decreased. The thermal conductivity may be decreased, and the heat-check resistance may be deteriorated. Therefore, the content of Al needs to be 0.080 mass% or less. The content of Al is preferably 0.070 mass% or less, and more preferably 0.060 mass% or less.

Note that in the case where Ca is added in order to improve machinability, the content of Al is extremely important for optimizing a form of a compound.

### (11) 0.003 mass% ≤ N ≤ 0.040 mass%:

In the steel material according to the present invention, the content of C and the content of V are much smaller than those of hot working die steel (SKD61) in the related art. Therefore, the content of V-based carbides serving as pinning particles during heating for quenching are smaller than those of SKD61. Therefore, in the present invention, N is added to increase the contents of V-shaped carbides, carbonitrides, and nitrides serving as pinning particles, thereby preventing the growth of austenite crystal grains. By adding N, AlN can also be utilized as pinning particles. See (5) in Table 1 described later.

In the case where the content of N is too small, the amount of AlN serving as pinning particles is insufficient. As a result, austenite crystal grains are coarsened during heating for quenching, and the impact value, fracture toughness value, and/or ductility may decrease. In the case where the content of N is too small, the contents of the V-based carbonitrides and nitrides which also serve as the pinning particles may be insufficient. Therefore, the content of N needs to be 0.003 mass% or more. The content of N is preferably 0.004 mass% or more, more preferably 0.005 mass% or more, and still more preferably 0.007 mass% or more.

On the other hand, in order to add N in an amount exceeding the amount that can be adjusted in normal refining, it is necessary to positively add N by using a dedicated equipment, which increases a material cost. In the case where the content of N is excessive, coarse crystallized products may be increased. See (4) in Table 1 described later. This tendency is apparent in the case where the content of C, the content of Si, and the content of V are large. Further, in the case where the content of N is excessive, an amount of coarse AlN may be excessively large, and the impact value may be decreased. Therefore, the content of N needs to be 0.040 mass% or less. The content of N is preferably 0.038 mass% or less, more preferably 0.036 mass% or less, and still more preferably 0.020 mass% or less.

### (12) Unavoidable Impurities:

The steel material according to the present invention may include unavoidable impurities. Elements that can be included as impurities in the steel material according to the present invention and contents thereof are as follows. P ≤ 0.03 mass%, S ≤ 0.006 mass%, O ≤ 0.006 mass%, W ≤ 0.30 mass%, Co ≤ 0.30 mass%, B ≤ 0.0002 mass%, Nb ≤ 0.004 mass%, Ta ≤ 0.004 mass%, Ti ≤ 0.004 mass%, Zr ≤ 0.004 mass%, Ca ≤ 0.0005 mass%, Se ≤ 0.03 mass%, Te ≤ 0.005 mass%, Bi ≤ 0.01 mass%, Pb ≤ 0.03 mass%, and Mg ≤ 0.02 mass%.

In the present invention, the "content" refers to an "average element content of the steel material" including a portion where segregation is high, a portion where segregation is low, and a portion where segregation is average. Examples of a method for evaluating the element content include (a) a method of analyzing a steel material having a predetermined mass (preferably 1 g or more per analysis of one element) by dissolving the steel material in an acid, and (b) a method of irradiating a surface of the steel material with X-rays.

### 1.1.2. Sub-constituent Element

The steel material according to the present invention may further include one or two or more elements described below in addition to the main constituent elements and the unavoidable impurities described above. Types of added elements, component ranges thereof, and reasons for limitation thereof are as follows.

### A. Group A

### (13) 0.30 mass% < W ≤ 2.00 mass%:

In the steel material according to the present invention, the content of C and the content of V are smaller than those of the hot working die steel in the related art, and thus strength may be insufficient depending on an application. In such a case, it is effective to add W for increasing the strength. In order to obtain such an effect, a content of W preferably exceeds 0.30 mass%. The content of W is more preferably 0.80 mass% or more.

On the other hand, in the case where the content of W is excessive, the material cost is increased. Manifestation of segregation may cause deterioration of mechanical properties or an increase in anisotropy. Therefore, the content of W is preferably 2.00 mass% or less. The content of W is more preferably 1.50 mass% or less.

### (14) 0.30 mass% < Co ≤ 1.00 mass%:

As with W, Co has an effect of increasing strength. Therefore, in the case where the strength is insufficient, it is effective to add Co for increasing the strength. In order to obtain such an effect, a content of Co preferably exceeds 0.30 mass%. The content of Co is more preferably 0.50 mass% or more.

On the other hand, in the case where the content of Co is excessive, the material cost is increased. Manifestation of segregation may cause deterioration of mechanical properties or an increase in anisotropy. Therefore, the content of Co is preferably 1.00 mass% or less. The content of Co is more preferably 0.90 mass% or less.

Note that the steel material according to the present invention may include either or both of Co and W.

### B. Group B

### (15) 0.0002 mass% < B ≤ 0.0080 mass%:

In the case where a content of P in the steel material is relatively large, P segregated in grain boundaries decreases grain boundary strength, and the impact value is decreased. Addition of B is effective for increasing the grain boundary strength. In order to increase the grain boundary strength, B needs to be present alone (without forming a compound) in the steel. When B forms BN, the effect of the addition of B is lost. Therefore, in the steel material including N, in the case where B is added for the purpose of increasing the grain boundary strength, N needs to be bonded to an element other than B.

Specifically, N is preferably bonded to a nitride-forming element such as Ti, Zr, or Nb, which easily forms a nitride. These elements are effective even in a content at an impurity level, but in the case where the elements are insufficient, it is preferable to add the elements with contents exceeding the impurity level.

Note that BN has an effect of improving the machinability of the steel material. Therefore, in the case where B is added for the purpose of improving machinability, it is not necessary to positively add the nitride-forming element to the steel material.

In order to obtain the above effect, the content of B is preferably more than 0.0002 mass%. The content of B is more preferably 0.0003 mass% or more, and still more preferably 0.0004 mass% or more.

On the other hand, even in the case where B is added more than necessary, there is no difference in the effect, and there is no practical benefit. In the case where the content of B is excessive, a cost of the steel material is increased. Therefore, the content of B is preferably 0.0080 mass% or less. The content of B is more preferably 0.0075 mass% or less, and still more preferably 0.0070 mass% or less.

### C. Group C

(16) 0.006 mass% < S ≤ 0.180 mass%:
(17) 0.0005 mass% < Ca ≤ 0.0500 mass%:
(18) 0.03 mass% < Se ≤ 0.50 mass%:
(19) 0.005 mass% < Te ≤ 0.100 mass%:
(20) 0.01 mass% < Bi ≤ 0.50 mass%:
(21) 0.03 mass% < Pb ≤ 0.50 mass%:

In the steel material according to the present invention, addition of free-cutting elements is effective for improving machinability. Specific examples of the free-cutting element include S, Ca, Se, Te, Bi, and Pb. The steel material according to the present invention may include any one of these free-cutting elements, or may include two or more thereof.

In order to obtain a sufficient free-cutting property, the contents of the free-cutting elements are preferably greater than the above respective lower limits.

On the other hand, in the case where the content of the free-cutting element is excessive, a crack is likely to occur during hot working. In the case where the content of the free-cutting element is excessive, the impact value, fatigue strength, heat-check resistance, and the like may be decreased. Therefore, the contents of the free-cutting elements are preferably equal to or less than the above respective upper limits.

### D. Group D

(22) 0.004 mass% < Nb ≤ 0.100 mass%:
(23) 0.004 mass% < Ta ≤ 0.100 mass%:
(24) 0.004 mass% < Ti ≤ 0.100 mass%:
(25) 0.004 mass% < Zr ≤ 0.100 mass%:

In the steel material according to the present invention, a carbonitride-forming element other than V and Al may be added to increase the amounts of carbides, carbonitrides, and/or nitrides. Specific examples of the carbonitride-forming element include Nb, Ta, Ti, and Zr. The steel material according to the present invention may include any one of these carbonitride-forming elements, or may include two or more thereof.

In order to prevent excessive grain growth of austenite crystal grains, the contents of the carbonitride-forming elements are preferably greater than the above respective lower limits.

On the other hand, in the case where the contents of the carbonitride-forming elements are excessive, the carbides, the carbonitrides, and/or the nitrides are crystallized in a coarse state during casting. Coarse crystallized particles remain as a foreign matter without being eliminated even during homogenization heat treatment, SA, and quenching, which causes a decrease in impact value and fatigue strength. Therefore, the contents of the carbonitride-forming elements are preferably equal to or less than the above respective upper limits.

### 1.2. Properties of Steel Material

### 1.2.1. Mass and Size

In the steel material according to the present invention, the content of C and the content of V are small, and the content of Mn and the content of Cr are optimized, and thus influences of the large foreign matter, low cooling rate after hot working, and low quenching rate are small. That is, in the steel material according to the present invention, even in the case where a mass and a size are large, the five properties of the SA property, the machinability, the impact value, the heat-check resistance, and the softening resistance can be achieved at a high level.

For example, in the case where the composition and manufacturing conditions of the steel material are optimized, a steel material having a mass of 3000 kg or more can be obtained in addition to all the five properties reaching a practical level. In the case where the composition and manufacturing conditions of the steel material are further optimized, even a steel material having a mass of 4000 kg or more or 5000 kg or more can be manufactured.

In the case where the composition and manufacturing conditions of the steel material are optimized, a steel material having the above properties and having a minimum dimension (Lₘᵢₙ) of 300 mm or more among a dimension (L₁) in a longitudinal direction, a dimension (L₂) in a lateral direction, and a dimension (L₃) in a height direction can be obtained. In the case where the composition and manufacturing conditions of the steel material are further optimized, even a steel material having Lₘᵢₙ of 350 mm or more or 400 mm or more can be manufactured.

Here, the "dimension (L₁) in the longitudinal direction", the "dimension (L₂) in the lateral direction", and the "dimension in the height direction (L₃)" refer to lengths of three sides of a rectangular parallelepiped body with a minimum volume that circumscribes the steel material, respectively.

### 1.2.2. Hardness

In the present invention, the "hardness of the steel material" refers to a Rockwell B scale hardness obtained by (a) cutting out a test piece from a vicinity of a center (a region where a solidification rate is low) of a cross section of a steel material subjected to SA, and (b) performing measurement at room temperature using the test piece.

For example, in the case where the steel material is a block material of a [mm] × b [mm] × c [mm] (a ≤ b ≤ c, a ≥ 300 mm), a first material of a [mm] × b [mm] × d [mm] is cut out from an end surface in a c-axis direction. A value of d is not particularly limited, and is preferably 30 mm to 70 mm.

Next, a second material of e [mm] × f [mm] × d [mm] is cut out from substantially a center of an ab surface of the first material. Values of e and f are not particularly limited, and it is preferable that e = 90 mm to 120 mm and f = 130 mm to 160 mm. Further, a test piece for hardness measurement is cut out from the second material, and used to measure the hardness.

When SA is performed on the steel material according to the present invention under appropriate conditions, the hardness of the steel material is appropriately decreased, and machining is possible. In the case where the composition and manufacturing conditions (in particular, SA conditions) of the steel material are optimized, the hardness at room temperature is 98 HRB or less. In the case where the composition and/or manufacturing conditions of the steel material are further optimized, the hardness at room temperature is 97 HRB or less or 96 HRB or less.

### 1.2.3. Impact Value

In the present invention, the "impact value of the steel material" refers to an impact value obtained by (a) cutting out a square bar (12 mm × 12 mm × 55 mm) from the vicinity of the center (the region where the solidification rate is low) of the cross section of the steel material subjected to SA, (b) thermally refining the square bar into 44.5 HRC to 45.5 HRC by heat treatment, (c) producing an impact test piece from the thermally refined square bar, and (d) performing an impact test at 15°C to 35°C.

A cut-out position of the square bar is the same as the cut-out position of the test piece for the hardness measurement. That is, a square bar is cut out from the above-described second material.

The "heat treatment" for thermally refining the square bar refers to treatment in which (a) the square bar is held at 970°C for 2 hours, then cooled from 970°C to 500°C at 6°C/min, cooled from 500°C to 180°C at 0.5°C/min, and cooled from 180°C to 100°C or lower at any cooling rate, and (b) subsequently, heat treatment in which heating to a temperature range of 560°C to 600°C and cooling to 100°C or lower are assumed as one cycle is performed once or more times.

The "impact test piece" refers to a test piece (10 mm × 10 mm × 50 mm, an arc radius of a notch tip: 1 mm, a notch depth: 2 mm, a cross-sectional area at a lower portion of a notch bottom of the test piece: 0.8 cm²) in accordance with JIS Z2242:2018.

The "impact value (J/cm²)" refers to a value obtained by dividing an absorption energy [J] by the cross-sectional area (0.8 [cm²]) of the test piece at the lower portion of the notch bottom.

An "average impact value (J/cm²)" refers to an average value of impact values of 10 or more (preferably 10 to 20) impact test pieces.

The "low-impact value ratio (%)" refers to a ratio (= n × 100/no) of the number (n) of impact test pieces having an impact value of less than 20 [J/cm²] to a total number (n₀) of impact test pieces subjected to the impact test.

In the steel material according to the present invention, in the case where the composition and manufacturing conditions are optimized, a steel material that exhibits a high impact value in spite of a large size and has a small variation in the impact value can be obtained.

Specifically, in the case where the composition and manufacturing conditions are optimized, a steel material having an average impact value of 25 [J/cm²] or more and a low-impact value ratio of 30% or less can be obtained.

In the case where the composition and manufacturing conditions are further optimized, the average impact value is 26 [J/cm²] or more or 27 [J/cm²] or more.

In the case where the composition and manufacturing conditions are further optimized, the low-impact value ratio is 20% or less or 10% or less.

### 1.2.4. Prior Austenite Crystal Grain Size

A "prior austenite crystal grain size" of the steel material refers to a value obtained by (a) producing the impact test piece or a test piece subjected to heat treatment under the same conditions as the impact test piece, (b) corroding the test piece to reveal a prior austenite crystal grain boundary, or determining a prior austenite crystal grain boundary by crystal orientation analysis, and (c) observing the test piece at a magnification such that 50 or more crystal grains are included in one field of view, and calculating an equivalent circle diameter of each prior austenite crystal grain included in the field of view.

An "average value of the prior austenite crystal grain size" refers to an average value of crystal grain sizes of all prior austenite crystal grains included in one or more fields of view having a total area of 0.5 mm² or more.

Since the steel material according to the present invention includes a relatively large amount of pinning particles, the austenite crystal grains are less likely to be coarsened during heating for quenching. In the case where the composition and manufacturing conditions of the steel material are optimized, the average value of the prior austenite crystal grain size is 150 µm or less. In the case where the composition and manufacturing conditions of the steel material are further optimized, the average value of the prior austenite crystal grain size is 135 µm or less or 120 µm or less.

### 2. Mold

A mold according to the present invention is made of the steel material according to the present invention and has the following properties.

### 2.1. Mass and Size

The mold of the present invention may have a mass of 2000 kg or more. In the case where composition and manufacturing conditions of the mold are further optimized, even a mold having a mass of 3000 kg or more or 4000 kg or more can be manufactured.

In the case where the composition and manufacturing conditions of the mold are optimized, a mold having the above properties and having a minimum dimension (L'ₘᵢₙ) of 250 mm or more among a dimension (L'₁) in the longitudinal direction, a dimension (L'₂) in the lateral direction, and a dimension (L'₃) in the height direction can be obtained. In the case where the composition and manufacturing conditions of the mold are further optimized, even a mold having L'ₘᵢₙ of 300 mm or more or 350 mm or more can be manufactured.

Here, the "dimension (L'₁) in the longitudinal direction", the "dimension (L'₂) in the lateral direction", and the "dimension (L'₃) in the height direction" refer to lengths of three sides of a rectangular parallelepiped body with a minimum volume that circumscribes the mold, respectively.

### 2.2. Hardness

In the present invention, the "hardness of the mold" refers to a Rockwell C scale hardness obtained by (a) cutting out a test piece from a surface of the mold, and (b) performing measurement at room temperature using the test piece.

Alternatively, the surface of the mold may be evaluated according to the Rockwell C scale using a portable hardness tester (a hardness meter). In addition, a hardness (for example, a Shore hardness) evaluated by the portable hardness tester (the hardness meter) may be converted into the Rockwell C scale hardness.

The mold according to the present invention can achieve a high hardness even in the case where the mass and size are relatively large. In the case where the composition and manufacturing conditions of the mold are optimized, the hardness at room temperature is 38 HRC to 48 HRC by the HT method. In the case where the composition and manufacturing conditions of the mold are further optimized, the hardness at room temperature is 39 HRC to 49 HRC or 40 HRC to 50 HRC.

By the PH method, the hardness at room temperature is 35 HRC to 45 HRC. In the case where the composition and manufacturing conditions of the mold are further optimized, the hardness at room temperature is 34 HRC to 44 HRC or 33 HRC to 43 HRC.

### 3. Method for Manufacturing Steel Material

A method for manufacturing the steel material according to the present invention includes (a) a first step of melting a raw material blended to have a predetermined composition, refining a molten metal, and casting the molten metal into a die, (b) a second step of subjecting an ingot to homogenization heat treatment, and (c) a third step subjecting the ingot after the homogenization heat treatment to hot working.

In the case of the steel material for the HT method, the method also includes, after the third step, (d) a fourth step of performing normalizing on a roughly shaped material after the hot working as necessary, (e) a fifth step of performing tempering on the roughly shaped material as necessary, and (f) a sixth step of performing spheroidizing annealing (SA) on the roughly shaped material.

On the other hand, in the case of the steel material for the PH method, the method also includes, after the third step, (d) a fourth step of performing normalizing on a roughly shaped material after the hot working as necessary, (e) a fifth step of performing tempering on the roughly shaped material as necessary, (f) a sixth step of performing spheroidizing annealing (SA) on the roughly shaped material as necessary, and (g) a seventh step of performing quenching and tempering on the roughly shaped material as necessary.

The sixth step is essential in the case of the steel material for the HT method. By the SA treatment, the steel material is thermally refined to a hardness that enables machining. On the other hand, in the case of the steel material for the PH method, the SA treatment is performed as necessary.

In the present invention, the "spheroidizing annealing (SA)" refers to treatment in which (a) a steel material is heated in a furnace to a temperature of [A_{c3} point - 10°C] to [A_{c3} point + 50°C] (hereinafter, also referred to as an "SA treatment temperature") to form a "structure with dispersed carbides in an austenite phase and very little or no ferrite phase", and (b) a slow cooling method or a constant temperature holding method is applied to the steel material having the above structure.

The SA treatment temperature is often 830°C to 950°C, depending on the components of the steel material. Regardless of whether the slow cooling method or the constant temperature holding method is used, the hardness of the steel material after SA is approximately 98 HRB or less (approximately 240 Hv or less), and is in a soft state that facilitates rough machining (processing into a rough mold shape by machining).

### 4. Effects

### 4.1. Background

In recent years, due to an increase in the size of a cast product, a die casting mold for manufacturing a cast product has also increased in size. The background of the increase in size of a cast product is that (a) each cast product is increased in size, or (b) components manufactured by assembling a plurality of cast products in the related art are cast in an integrated state.

In a case of a large die casting mold, a weight of the mold is 2000 kg or more, and a weight of a material for mold manufacturing is 3000 kg or more. A steel material used for a large die casting mold is required to be easily cut (high in machinability), hardly cracked (heat check) on a mold surface, and hardly cracked largely.

A large crack is a crack reaching a deep portion of the mold, and the timing of occurrence of the large crack is the service life of the mold. In the mold surface, the heat check may cause a large crack, and it is required to prevent the large crack and the heat check.

In the present invention, in order to prevent a large crack, the contents of C and V are reduced and the contents of Mn and Cr are increased as compared with steels in the related art. Then, the components are further optimized based on the following three new viewpoints. (a) Reduction of retained austenite by a high Mo content, (b) Extension of creep rupture time by a high Mo content, and (c) prevention of transformation heat generation by a low Si content

The above three points are important in a large mold of 2000 kg or more, but are not recognized as problems in molds in the related art, which are mostly less than 2000 kg.

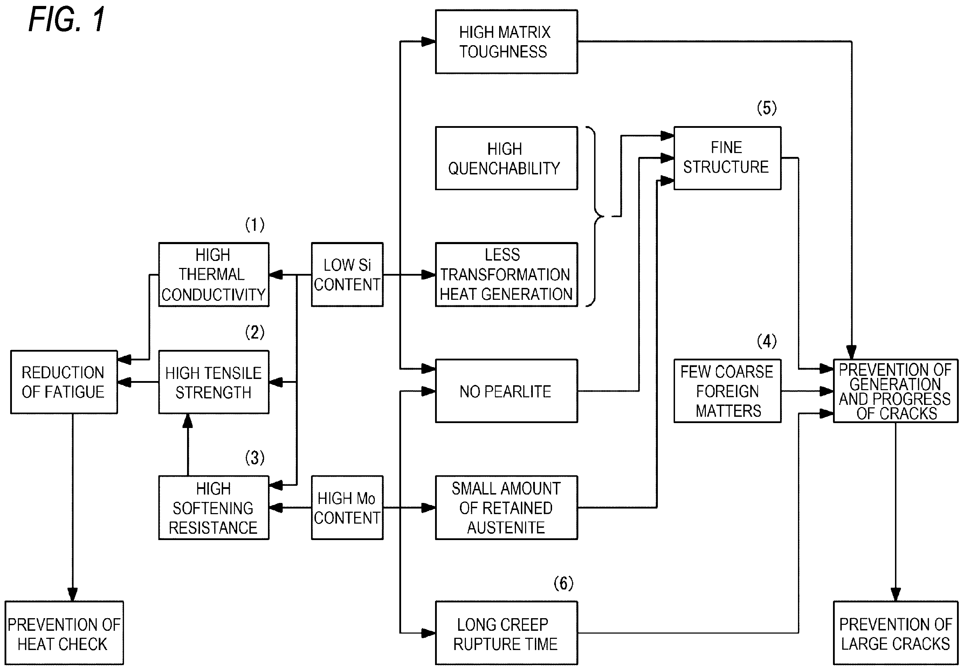

FIG. 1 shows a schematic diagram of effects obtained by increasing the Mo content and decreasing the Si content.

### 4.2. Method for Preventing Large Crack

### 4.2.1. Reduction of Retained Austenite

The retained austenite in the quenched structure is transformed into martensite by sub-zero treatment. However, when a steel material including retained austenite is tempered, the retained austenite is transformed into bainite at a high temperature (> Ms point + 120°C). The coarse bainite structure transformed at a high temperature has a negative effect on the impact value and fracture toughness.

It is said in the related art that retained austenite is transformed into martensite by tempering. Accordingly, it is recognized that even when retained austenite is present, there is no problem in the properties such as toughness by tempering. In contrast, in the present invention, it has been found that the tempered retained austenite is transformed into bainite at a high temperature, and it has been concluded that control of the amount of retained austenite is important for prevention of large cracks.

The amount of retained austenite increases as the quenching rate decreases. Therefore, as the size of the die casting mold increases, the amount of retained austenite increases. In recent upsizing of die casting molds, it is expected that it will be important to reduce retained austenite as much as possible.

The steel material according to the present invention is characterized in that the content of Mo is increased as compared with steels in the related art in order to reduce the amount of retained austenite.

### 4.2.2. Extension of Creep Rupture Time

In a large die casting mold, creep strength is expected to be important in addition to an impact value and fracture toughness. In die casting, a long time is required for solidification of a large cast product, and a mold clamping time becomes long. During mold clamping, a high load continues to act on the mold at a high temperature in a state of small fluctuation. This load may cause creep deformation, and may lead to a large crack of the mold.

The steel material according to the present invention is characterized in that the content of Mo is increased as compared with steels in the related art in order to increase the creep rupture time.

### 4.2.3. Prevention of Transformation Heat Generation

When austenite is transformed into another phase, heat is generated due to a change in crystal structure or thermophysical property value. This is transformation heat generation. Due to the transformation heat generation, the temperature of the steel material during quenching hardly decreases. Rise or stagnation in temperature may occur even during cooling for quenching. This tendency is apparent on an inner side of a large die casting mold.

The transformation heat generation has a negative effect on the structure and properties. This is because the diffusion type transformation proceeds even while the rise or stagnation in temperature occurs due to the transformation heat generation. For example, in the bainite transformation in which the transformation heat generation is large, the transformation proceeds at a high temperature than in the case where the transformation heat generation is small. Therefore, it is difficult to obtain a fine structure.

The steel material according to the present invention is characterized in that the content of Si is reduced as compared with steels in the related art in order to prevent the transformation heat generation.

### 4.2.4. Effects of Low V content and High Mo content

In order to obtain a hardness of 45 HRC or more, the steels in the related art such as SKD61 often satisfy 0.50 mass% ≤ V ≤ 1.20 mass% and 1.00 mass% ≤ Mo ≤ 2.00 mass%. When a heat check of mold is repaired by welding with a bar material or a wire material manufactured from such steels, a V-based carbide or carbonitride is crystallized at a welded portion. This is because the welding repair material is solidified from a molten state, and it is a phenomenon similar to the crystallization during casting. The crystallized product crystallized during welding is smaller than the crystallized product crystallized during casting, but may cause large cracks.

In contrast, the steel material according to the present invention has a low V content and a high Mo content (V ≤ 0.30 mass%, 2.00 mass% ≤ Mo). Therefore, when the steel material is used as a bar material, a wire material, or powder for welding repair or additive manufacturing, the above problem does not occur. This is because the content of V is small. In addition, since the content of Mo is large, a hardness of 45 HRC or more can be stably obtained.

### 4.3. Optimization of Components

Hereinafter, the optimization of the components for achieving the prevention of heat check, prevention of large cracks, improvement of SA property, and improvement of machinability will be described in detail. Table 1 shows effects obtained by adjusting the elements in relation to the prevention of heat check and prevention of large cracks.

**[Table 1]**

| Target | Direction of achievement | Means | Properties and situations of mold | Particularly important elements |
|---|---|---|---|---|
| Control of heat check | Reduction of fatigue | Reduce thermal stress | (1) High thermal conductivity | Si, Mn, Cr |
| | | Increase resistance | (2) High high-temperature tensile strength | Si, Mo, Cr |
| | | | (3) High softening resistance | |
| Prevention of large cracks | Control of generation and progress of cracks | Increase impact value and fracture toughness | (4) Few coarse foreign matters | C, V, Si, N |
| | | | (5) Fine structure | Mn/Cr, Ni, Cu (austenite memory) |
| | | | | C, V, Al, N (pinning particles) |
| | | | | Si, Mn, Mo (pearlite) |
| | | | | Mn + Cr (quenchability in low temperature range) |
| | | | | Si (transformation heat generation) |
| | | | | Mo (retained austenite) |
| | | Resistance to load under high temperature for long time | (6) Long creep rupture time | Mo |

### 4.3.1. Prevention of Heat Check

The prevention of heat check is an effect obtained by reducing thermal fatigue. In order to reduce thermal fatigue, it is necessary to reduce a thermal stress generated in the mold and simultaneously increase a resistance of the mold against the thermal stress.

In order to reduce the thermal stress, it is effective to increase a thermal conductivity of the steel material. In the present invention, the thermal conductivity is increased by the following methods. (a) Reduce the content of Si. (b) Do not excessively increase the content of Mn and the content of Cr.

In order to increase the resistance, it is effective to increase high-temperature tensile strength and softening resistance. In the present invention, the high-temperature tensile strength and softening resistance are increased by the following methods. (a) Reduce the content of Si. (b) Increase the content of Mo. (c) Do not excessively increase the content of Cr.

### 4.3.2. Prevention of Large Cracks

The prevention of large cracks is an effect obtained by preventing generation and progress of cracks. In order to prevent the generation and progress of cracks, it is necessary to increase the impact value, fracture toughness, resistance to a load in a high temperature for a long time, and the like. In order to increase the impact value and fracture toughness, it is effective to reduce coarse foreign matters and simultaneously make the structure fine.

Note that the coarse foreign matters in the present invention are large particles having a size exceeding 0.5 µm, which is harmful to the impact value and fracture toughness. The coarse foreign matters are roughly classified into the following two kinds depending on sources thereof. (4a) Crystallized products during ingot solidification with a size of approximately 5 µm to 150 µm, and (4b) precipitates formed after hot working with a size of approximately 0.5 µm to 10 µm

In the present invention, coarse foreign matters are reduced by the following methods. (a) Reduce the content of C and the content of V (b) Do not excessively increase the content of Si and the content of N.

The reason why the content of C and the content of V are adjusted is that most of the foreign matters include C and V. The reason why the content of Si and the content of N are adjusted is that they affect the amount of foreign matters and become constituent elements of the foreign matters.

Refinement of the structure is performed by optimizing the following six matters (a) to (f).

Note that (a) and (b) relate to refinement of austenite crystal grains during heating for quenching, and (c), (d) and (e) relate to prevention of phase transformation behavior during cooling for quenching, and (f) relates to a structure after quenching is completed.

### (a) Austenite Memory in Heating for Quenching:

The "austenite memory" refers to a phenomenon in which a position of an austenite crystal grain boundary in heating for quenching (> Ac3 point) is almost the same as a position of a prior austenite crystal grain boundary before heating (< Ac1 point). That is, the prior austenite grain size hardly changes before and after quenching. When prior austenite crystal grains before quenching are coarse, the prior austenite crystal grains are hardly refined by heating for quenching, and the prior austenite crystal grains of the quenched material remain coarse as before the quenching.

The austenite memory is likely to occur when bainite or martensite is present in an SA material. For example, the austenite memory is likely to occur in the case where untransformed austenite retained during furnace removal by the slow cooling method or the constant temperature holding method may become bainite or martensite by quick cooling after the furnace removal. That is, austenite memory is likely to occur in steel materials having "high quenchability but poor SA property". In order to avoid austenite memory, mainly, the Mn/Cr ratio, the content of Ni, and the content of Cu are optimized so that the SA property is ensured while maintaining high quenchability.

### (b) Pinning Particles Dispersed in Austenite During Quenching:

Fine austenite crystal grains obtained by avoiding austenite memory during heating for quenching tend to be coarsened during holding at a heating temperature. The pinning particles present during quenching prevent coarsening of the austenite crystal grains. In the present invention, in order to optimize the amount of pinning particles, mainly the content of C, the content of V, the content of Al, and the content of N are optimized.

The particles dispersed in the quenched structure are preferably small particles having a size of 0.5 µm or less and at most 1 µm. The size is a length measured in a direction in which the length of the particle is maximized.

### (c) Pearlite Precipitation During Cooling for Quenching:

When pearlite is precipitated during cooling for quenching, the quenched structure becomes a state in which pearlite is dispersed in a matrix of bainite or martensite. Pearlite is coarse and has lower strength than the matrix, and therefore causes large cracks during use of the mold. In the present invention, the content of Si, the content of Mn, and the content of Mo are mainly optimized in order to prevent the precipitation of pearlite.

### (d) Quenchability in low temperature range that is capable of forming martensite or bainite transformed at low temperature:

As the quenchability in a low temperature range increases, the formation of coarse bainite is prevented. In the present invention, in order to improve the quenchability in a low temperature range, the content of Mn + Cr is mainly optimized.

### (e) Heat Generation During Transformation into Bainite or Martensite

Especially, in a large steel material, the structure after quenching becomes finer as transformation heat generation becomes smaller. In the present invention, in order to prevent transformation heat generation, mainly, the content of Si is optimized.

### (f) Amount of Retained Austenite in Quenched Structure:

A site of retained austenite included in the quenched structure becomes coarse bainite transformed at a high temperature by tempering. In a structure in which a coarse bainite region is present, cracks easily progress. In the present invention, in order to reduce the amount of retained austenite, the content of Mo is mainly optimized.

The "resistance to a load in a high temperature for a long time" means that the creep rupture time is lengthened. That is, even when a high load at a high temperature continues to act for a long time in a state of small fluctuation, it is necessary to be difficult to be broken. In the present invention, in order to lengthen the creep rupture time, the content of Mo is optimized mainly.

### 4.3.3. SA Property

It is preferable that the steel material for the HT method has an excellent SA property. When the quenchability is increased by increasing the contents of Mn, Ni, and Cu, the SA property deteriorates. Since the steel material according to the present invention requires high quenchability, a good SA property is ensured by the following methods. (a) Do not excessively increase the content of Mn. (b) Optimize the Mn/Cr ratio, (c) Make upper limits of the contents of Ni and Cr low.

When the SA property is good, the austenite memory phenomenon during heating for quenching can be avoided, and thus, it also contributes to fine graining.

### 4.3.4. Machinability

It is preferable that both the steel material for the HT method and the steel material for the PH method have excellent machinability. When the content of Si is reduced in order to prevent heat check, the machinability deteriorates. Since the steel material according to the present invention also requires prevention of heat check, the following methods are used to ensure the machinability that enables industrial cutting. (a) Do not excessively reduce the content of Si. (b) Do not excessively increase the content of Cr and the content of Mo.

### EXAMPLES

### 1. Various Verification Tests

### 1.1. Preferable Ranges of Content of Mn and Content of Cr

### 1.1.1. Overview

A large die casting mold has a low quenching rate. Especially, a cooling rate from 500°C to 180°C inside the mold may be 1.5°C/min or less. Even under such conditions, it is necessary to have high quenchability that causes martensite transformation or bainite transformation at a low temperature (≤ Ms point + 120°C) to form a fine structure.

When the content of Mn and the content of Cr are increased, the quenchability is improved, but when the content of Mn is increased, the SA property is deteriorated. Especially, a high SA property is required for the steel material for the HT method. Therefore, in the present invention, the quenchability was investigated by the content of Mn and the content of Mn + Cr, and the SA property was investigated by the Mn/Cr ratio, so as to achieve both quenchability and SA property. Further, when determining a preferred range, softening resistance (content of Cr) was also taken into consideration.

### 1.1.2. Preparation of Test Piece and Test Method

Components (mass%) of a steel material were set to 0.32 C-0.34 Si-0.08 Cu-0.11 Ni-2.16 Mo-0.18 V-0.028 Al-0. 011 N, and the content of Mn and the content of Cr were systematically changed. This steel material was cast into an ingot of 150 kg. Homogenization heat treatment, hot working, normalizing, tempering, and SA were performed on the obtained ingot.

The SA property was evaluated using the obtained steel material.

That is, a test piece of 12 mm × 12 mm × 20 mm for SA property evaluation was produced from the steel material after SA. The test piece was subjected to vacuum heat treatment simulating "hot working-normalizing-tempering-spheroidizing annealing" in a manufacturing process of a large mold material, and the SA property thereof was evaluated. Note that in this verification, the normalizing and the tempering were performed, but these treatments may be omitted.

Details of the vacuum treatment step are as follows.

That is, first, the test piece was held in vacuum at 1240°C for 0.5 hours. This treatment is for reproducing coarse crystal grains of a hot-worked material. After holding at 1240°C for 0.5 hours, a nitrogen gas was introduced into a furnace, and the nitrogen gas was pressurized to cause forced convection to cool the test piece to 100°C or lower.

Subsequently, the test piece was held in vacuum at 1020°C for 1 hour. This treatment simulates the normalizing. After holding at 1020°C for 1 hour, the nitrogen gas was introduced into the furnace, and the nitrogen gas was pressurized to cause forced convection to cool the test piece to 100°C or lower.

Subsequently, the test piece was held in vacuum at 680°C for 6 hours. This treatment simulates the tempering. After holding at 680°C for 6 hours, the nitrogen gas was introduced into the furnace, and the nitrogen gas was pressurized to cause forced convection to cool the test piece to 100°C or lower.

Finally, SA was performed. That is, the test piece was held in vacuum at 900°C for 1 hour. Thereafter, the test piece was cooled to 600°C at 15°C/hour in vacuum. Thereafter, the nitrogen gas was introduced into the furnace, and the nitrogen gas was pressurized to cause forced convection to cool the test piece to 100°C or lower.

Quenchability was evaluated using the obtained steel material.

That is, ten square bars of 12 mm × 12 mm × 55 mm were produced from a round rod in the SA state. The square bar was held in vacuum at 970°C for 2 hours and then quenched. A cooling rate during quenching was 6°C/min from 970°C to 500°C and 0.5°C/min from 500°C to 180°C.

The above quenching step is one of examples assuming an inside having a lowest cooling rate in the case where a large mold of 2000 kg or more is quenched. Since the cooling rate of 180°C or less does not significantly affect the impact value, the cooling rate from 180°C to 100°C or less was not particularly controlled.

Subsequently, the square bar was tempered. The tempering was performed by holding the square bar at 590°C for 2 hours and then cooling the square bar to 100°C or lower.

Further, tempering was additionally performed. That is, the above square bar was held at 560°C to 600°C for a predetermined time, and then cooled to 100°C or lower. This treatment was performed once or more, and the square bar was thermally refined to 44.5 HRC to 45.5 HRC.

An impact test piece was produced from the square bar thermally refined to 44.5 HRC to 45.5 HRC. The impact test piece had a shape (10 mm × 10 mm × 50 mm, an arc radius of a notch tip: 1 mm, a notch depth: 2 mm, a cross-sectional area at a lower portion of a notch bottom of the test piece: 0.8 cm²) in accordance with JIS Z2242:2018. An impact test was performed at 15°C to 35°C using the obtained impact test piece.

An impact value was used for the evaluation. The "impact value [J/cm²]" referred to here is a value obtained by dividing an absorption energy [J] by the cross-sectional area of 0.8 cm² at the lower portion of the notch bottom of the test piece, and refers to an average value often test pieces.

### 1.1.3. Results

FIG. 2 shows ranges of the content of Mn and the content of Cr for obtaining a steel material excellent in the SA property and quenchability. In FIG. 2, a hatched area represents a range in which the hardness after SA is 98 HRB or less, the impact value after quenching and tempering is 25 J/cm² or more, and high softening resistance is exhibited.

### 1.2. Preferable Content of Mo (1): Amount of Retained Austenite

### 1.2.1. Preparation of Test Piece and Test Method

Components (mass%) of steel materials were set to 0.32 C-0.28 Si-0.81 Mn-0.11 Cu-0.23 Ni-6.22 Cr-0.22 V-0.017 Al-0. 012 N, and the content of Mo was changed in a range of 0.51 mass% to 3.06 mass%. These steel materials were cast into an ingot of 150 kg. Homogenization heat treatment, hot working, normalizing, tempering, and SA were performed on the obtained ingot.

A round rod having a diameter of 12 mm and a length of 50 mm was produced from the material after SA (rectangular material having a cross section of 40 mm × 65 mm).

A cooling step for quenching the round rod at 970°C was divided into two types. The first type is a step of heating at 970°C for 2 hours, followed by cooling to 500°C at 100°C/min and cooling from 500°C to 180°C at 20°C/min. The second type is a step of heating at 970°C for 2 hours, followed by cooling to 500°C at 6°C/min and cooling from 500°C to 180°C at 0.5°C/min.

The cooling rate for 500°C or less simulates the center portion of the mold. The rate 20°C/min (first step) is assumed for quenching a small mold of approximately 5 kg. The rate 0.5°C/min (second step) is assumed for quenching a large mold of 2000 kg or more. A test piece was cut out from the quenched round rod, and the amount of retained austenite was measured.

### 1.2.2. Results

FIG. 3 shows a relation between the amount of retained austenite and the content of Mo. When the cooling rate was 20°C/min, the amount of retained austenite was as small as approximately 5%, and the influence of the content of Mo was small.

On the other hand, when the cooling rate is 0.5°C/min, the amount of retained austenite is large. Especially, when the content of Mo was small, the amount of retained austenite reached 20%. When the content of Mo was 2 mass% or more, the amount of retained austenite was significantly reduced even at a cooling rate of 0.5°C/min. That is, it was found that, in the case of a large mold in which the quenching rate becomes small, the content of Mo may be set to 2.00 mass% or more in order to reduce the amount of retained austenite.

### 1.3. Preferable Content of Mo (2): Creep Rupture Time

### 1.3.1. Preparation of Test Piece and Test Method

A material after SA was produced in the same manner as in [1.2.1.]. Around rod having a diameter of 18 mm and a length of 100 mm was produced from the material after SA. After heating the round rod at 970°C for 2 hours, quenching was performed in which the round rod was cooled to 500°C at 6°C/min and cooled from 500°C to 180°C at 0.5°C/min. Further, after being cooled to 100°C or less, the round rod was subjected to tempering a plurality of times at 560°C to 600°C and then thermally refined to 45 HRC.

A creep test piece having a total length of 70 mm, a diameter of a parallel portion of 6 mm, and a length of the parallel portion of 30 mm was produced from the thermally refined round rod. A load of 1000 MPa was applied to the test piece at 500°C, and the rupture time was evaluated.

### 1.3.2. Results

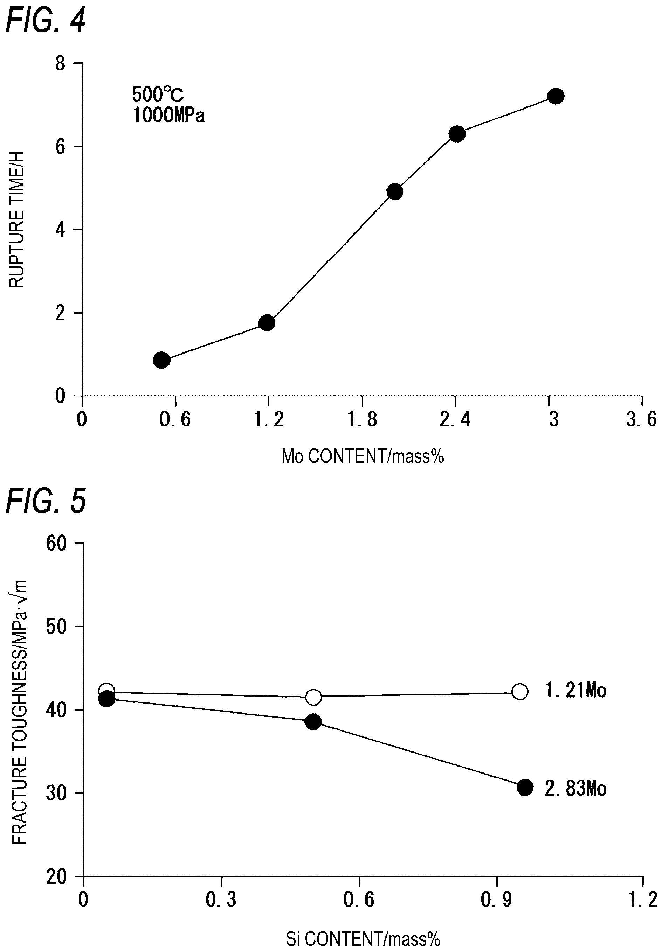

FIG. 4 shows a relation between the creep rupture time and the content of Mo. As the content of Mo is increased, the creep rupture time is increased. When the content of Mo was approximately 2.0 mass% or more, a long rupture time could be stably achieved.

That is, it has been found that, in the case where a high load continues to act over a long time in a state of small fluctuation at a high temperature as in a die casting mold for manufacturing a large cast product, the content of Mo may be set to 2.00 mass% or more in order to prevent breakage.

### 1.4. Preferable Content of Si (1): Fracture Toughness

### 1.4.1. Preparation of Test Piece and Test Method

Components (mass%) of steel materials were set to 0.34 C-0.86 Mn-6.33 Cr-0.22 V0.018 Al-0. 011 N, and the content of Mo was 1.21 mass% or 2.83 mass%. The content of Si was changed in a range of 0.05 mass% to 0.96 mass%. These steel materials were cast into an ingot of 150 kg. Homogenization heat treatment, hot working, normalizing, tempering, and SA were performed on the obtained ingot.

A plate material having a height of 13 mm, a width of 62 mm, and a length of 65 mm was produced from the material after the SA (rectangular material having a cross section of 40 mm × 65 mm). After heating the plate material at 970°C for 2 hours, quenching was performed in which the round rod was cooled to 500°C at 6°C/min and cooled from 500°C to 180°C at 0.5°C/min. Further, after being cooled to 100°C or less, the plate material was subjected to tempering a plurality of times at 560°C to 600°C and then thermally refined to 43 HRC.

A fracture toughness test piece having a thickness of 12.5 mm, a width of 61 mm, and a length of 64 mm was prepared from the thermally refined plate material. Fracture toughness was measured at room temperature using this test piece.

### 1.4.2. Results

FIG. 5 shows a relation between fracture toughness and the content of Si. In the case where the content of Si was 0.96 mass%, when the content of Mo was increased from 1.21 mass% to 2.83 mass%, the fracture toughness decreased. Although not shown, it was found that especially when the content of Mo is 3.5 mass% or more, the fracture toughness becomes very low.

On the other hand, even when the content of Mo was 2.83 mass%, the fracture toughness increased when the content of Si was reduced. Especially, in the case where the content of Mo was 2.83 mass%, when the content of Si was 0.40 mass% or less, the fracture toughness value was equivalent to the fracture toughness value of the test piece in which the content of Mo was 1.21 mass%.

That is, it was found that when the content of Mo is increased from the viewpoint of the amount of retained austenite and the creep strength with respect to a large mold in which the quenching rate becomes small, the fracture toughness can be ensured by setting the content of Si to 0.40 mass% or less.

### 1.5. Preferable Content of Si (2): High-temperature Tensile Strength

### 1.5.1. Preparation of Test Piece and Test Method

A material after SA was produced in the same manner as in [1.4.1.]. Around rod having a diameter of 18 mm and a length of 105 mm was produced from the material after SA. After heating the round rod at 970°C for 2 hours, quenching was performed in which the round rod was cooled to 500°C at 6°C/min and cooled from 500°C to 180°C at 0.5°C/min. Further, after being cooled to 100°C or less, the round rod was subjected to tempering a plurality of times at 560°C to 600°C and then thermally refined to 45 HRC.

A tensile test piece having a total length of 100 mm, a diameter of a parallel portion of 8 mm, and a length of the parallel portion of 40 mm was produced from the thermally refined round rod. A tensile test was performed at 600°C using this test piece.

### 1.5.2. Results

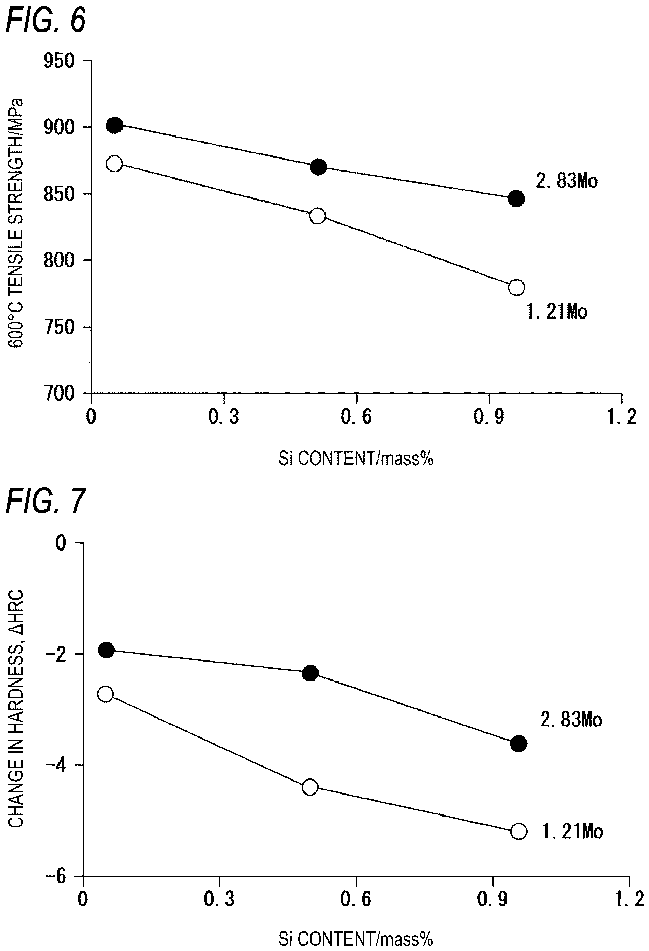

FIG. 6 shows a relation between the high-temperature tensile strength and the content of Si. It was found that the lower the content of Si, the higher the high-temperature tensile strength. It was found that when the content of Si is approximately 0.4 mass% or less, high high-temperature tensile strength can be stably achieved. Further, it was found that even when the content of Mo was large, the high-temperature tensile strength is increased by reducing the content of Si. That is, it was found that when the content of Mo is increased, the high-temperature tensile strength can be effectively increased by simultaneously reducing the content of Si (Si ≤ 0.40 mass%).

### 1.6. Preferable Content of Si (3): Softening Resistance

### 1.6.1. Preparation of Test Piece and Test Method

A material after SA was produced in the same manner as in [1.4.1.]. A block material having a height of 11 mm, a width of 12 mm, and a length of 20 mm was produced from the material after SA. After heating the block material at 970°C for 2 hours, quenching was performed in which the block material was cooled to 500°C at 6°C/min and cooled from 500°C to 180°C at 3°C/min. Further, after being cooled to 100°C or less, the round rod was subjected to tempering a plurality of times at 560°C to 600°C and then thermally refined to 45 HRC.

Note that the cooling rate of 3°C/min for 500°C or less is assumed in a surface portion of a large mold of 2000 kg or more. Since the portion where softening becomes a problem is the surface of the mold, quenching of a surface portion was simulated.

The thermally refined block material was heated to 580°C in a vacuum furnace, held at 580°C for 10 hours, and then cooled to room temperature. Cooling was performed for about 1 hour from 580°C to 150°C.

At room temperature, an initial HRC hardness and an HRC hardness (H) after the heat treatment were measured. A difference ΔHRC (= H - 45) between the HRC hardness (H) after the heat treatment and the initial HRC hardness (45 HRC) was calculated and used as an index of softening resistance.

### 1.6.2. Results

FIG. 7 shows a relation between the softening resistance (ΔHRC) and the content of Si. It was found that the smaller the content of Si, the smaller the absolute value of ΔHRC, that is, the higher the softening resistance. It was found that when the content of Si is approximately 0.4 mass% or less, a high softening resistance can be stably ensured. Further, it was found that even when the content of Mo was large, the softening resistance is increased by reducing the content of Si. That is, it was found that when the content of Mo is increased, the softening resistance can be effectively increased by simultaneously reducing the content of Si (Si ≤ 0.40 mass%).

Note that 0.96 Si-1.21 Mo in FIG. 7 is SKD61. The steel according to the present invention has a lower content of C and a lower content of V than those of SKD61, and especially, the content of V is as low as 0.22 mass%, but the softening resistance is increased by having a low Si content and a high Mo content. Validity of the low V content and high Mo content was confirmed.

It is known that when the content of Si as a solid solution strengthening element is reduced, the strength at room temperature is reduced. On the other hand, it was found that when the content of Si is reduced, the high-temperature tensile strength and the softening resistance are increased. This is because coarsening of carbides at a high temperature (a region of 450°C or more and less than the Ac1 point) is prevented by lowering the content of Si.

### 1.7. Preferable Content of Si (4): Prevention of Pearlite Precipitation

### 1.7.1. Preparation of Test Piece and Test Method

A material after SA was produced in the same manner as in [1.4.1.]. A test piece having a diameter of 4 mm and a length of 10 mm was produced from the material after SA. The test piece was cooled from 970°C to 100°C or lower at a constant rate. The cooling rate was varied. The dimensional change of the test piece during cooling was measured, and expansion due to pearlite transformation was attempted to be detected. After cooling to room temperature, it was confirmed by structure observation whether there was pearlite precipitation.

According to the above procedure, a critical cooling rate of pearlite precipitation was determined. In order to prevent pearlite precipitation, the lower the critical cooling rate, the better. This is because pearlite is less likely to be precipitated even in slow cooling, and therefore it is suitable for large molds in which the quenching rate is low.

### 1.7.2. Results

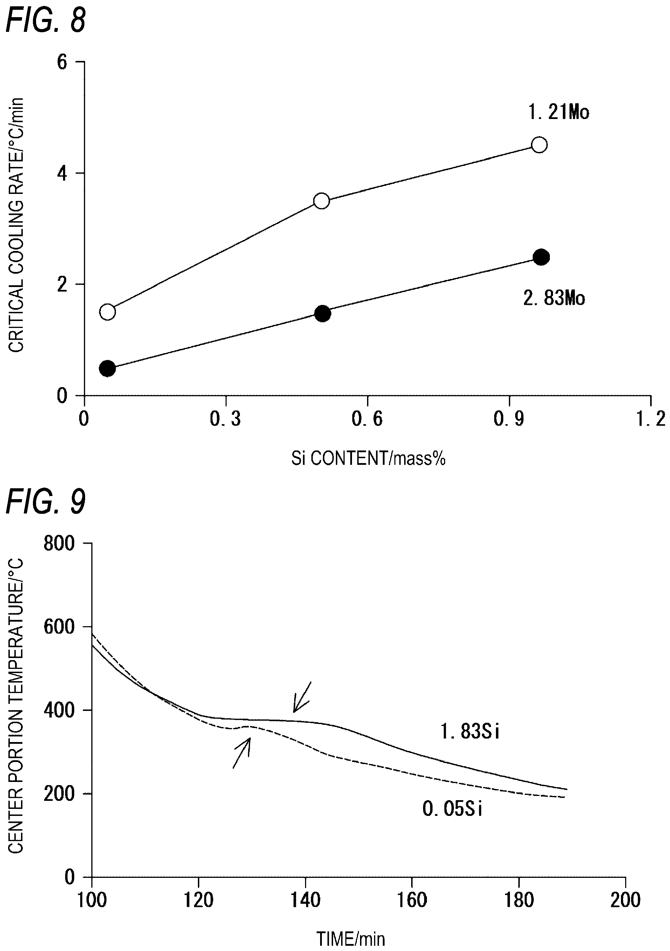

FIG. 8 shows a relation between the critical cooling rate of pearlite precipitation and the content of Si. It was found that the critical cooling rate decreases as the content of Si decreases. It was found that when the content of Si is approximately 0.4 mass% or less, a low critical cooling rate can be stably ensured. Further, it was found that even when the content of Mo was large, the critical cooling rate can be lowered by reducing the content of Si.

When the content of Mo is increased from the viewpoint of the amount of retained austenite and creep strength with respect to such a large mold or a steel material for a large mold, the critical cooling rate can be effectively lowered, that is, pearlite precipitation can be prevented, by simultaneously reducing the content of Si (Si ≤ 0.40 mass%).

### 1.8. Preferable Content of Si (5): transformation heat generation

### 1.8.1. Preparation of Test Piece and Test Method

Components (mass%) of steel materials were set to 0.35 C-0.83 Mn-0.07 Cu-0.12 Ni-6.28 Cr-2.26 Mo-0.24 V-0.019 Al-0. 012 N, and the content of Si was 0.05 mass% or 1.83 mass%. These steel materials were cast into an ingot of 10 ton. Homogenization heat treatment, hot working, normalizing, tempering, and SA were performed on the obtained ingot.

A block having a height of 400 mm, a width of 400 mm, a length of 800 mm, and a mass of approximately 1 ton was produced from the steel material after SA. A thermocouple was inserted into a center portion of the block, and a temperature during vacuum quenching was measured. Vacuum quenching was performed by a method in which the block was heated to 970°C in vacuum, and nitrogen gas was introduced into a furnace, and a pressure was increased to 10 Bar, and the nitrogen gas was made to form forced convection.

### 1.8.2. Results

FIG. 9 shows temperature transition of the center portion of the block during rapid cooling. Stagnation or rise in temperature (indicated by arrows in FIG. 9) due to transformation heat generation was confirmed. The smaller the content of Si, the smaller the amount of transformation heat generation. On the other hand, an average cooling rate from 450°C to 200°C was approximately 3°C/min regardless of the content of Si included in the block.

### 1.9. Preferable Content of Si (6): Influence of Transformation Heat Generation on Impact Value

### 1.9.1. Preparation of Test Piece and Test Method

The impact value and the fracture toughness are greatly affected by the cooling rate from a temperature Ts to a temperature Tf at 500°C or less during quenching cooling. In the range of temperature of 500°C or less, there is a temperature range which particularly greatly affects the impact value and the fracture toughness. In the present specification, the starting temperature of such temperature range is defined as Ts, and the finish temperature of such temperature range is defined as Tf. Ts and Tf are different depending on the type of steel, but in the case of the evaluated two types of steel, it was known in advance study that Ts = 450°C and Tf = 200°C. Therefore, an average cooling rate from 450°C to 200°C was evaluated. Note that the range from Ts to Tf is a temperature range in which bainite transformation or martensite transformation occurs.

The block after the vacuum quenching produced in [1.8.1.] was tempered at 560°C to 600°C a plurality of times, and was thermally refined to 47 HRC. When the structure in the vicinity of the center portion of the thermally refined block was confirmed, pearlite was not precipitated. This is because the cooling rate in the pearlite transformation region from 800°C to 600°C exceeded 5°C/min.

An impact test piece was produced from the vicinity of the center portion of the thermally refined block. The test piece used had a size of 10 mm square, a length of 55 mm, a notch bottom radius of 1 mm, and a notch depth of 2 mm. The impact value at room temperature was measured using the obtained impact test piece.

### 1.9.2. Results

When the content of Si was 1.83 mass%, the impact value was 19 J/cm². On the other hand, when the content of Si was 0.05 mass%, the impact value was 34 J/cm².

Since the block has a mass of approximately 1 ton, which is not so large, and is strongly cooled by 10 Bar, the quenching rate is high. In addition, the evaluated steel material has high quenchability (a high content of Mn + Cr). For the above reasons, it is considered that the impact value of the material having a content of Si of 0.05% was increased.

On the other hand, although the quenching rate and quenchability of the material having a content of Si of 1.83% were almost the same as those of the material having a content of Si of 0.05%, the impact value thereof was decreased.

From the above results, it was found that even when the average cooling rate in the bainite transformation region is the same, the impact value of the steel material having small transformation heat generation is higher than that of the steel material having large transformation heat generation. It is considered that the influence of transformation heat generation becomes conspicuous in a large mold which is hard to be cooled. Accordingly, it was found that in order to stably obtain a high impact value in a large mold, it is necessary not only to improve quenchability but also to prevent transformation heat generation.

### 1.10. Simulation of Transformation Heat Generation of Large Mold

### 1.10.1. Test Method

In the quenching of the large mold in the HT method and the quenching of the steel material for a large mold in the PH method, a delay in cooling due to transformation heat generation becomes apparent. Simulation was performed to estimate this situation, which is difficult to experiment with.

The target of simulation was quenching of a large mold steel material in the PH method. SKD61 was used as the steel material. The size of the steel material was 700 mm in thickness, 1000 mm in width, 2300 mm in length, and the mass of the steel material was approximately 12.5 ton. Vacuum quenching (pressure of nitrogen gas: 10 Bar) of the steel material from 1030°C was simulated.

### 1.10.2. Results

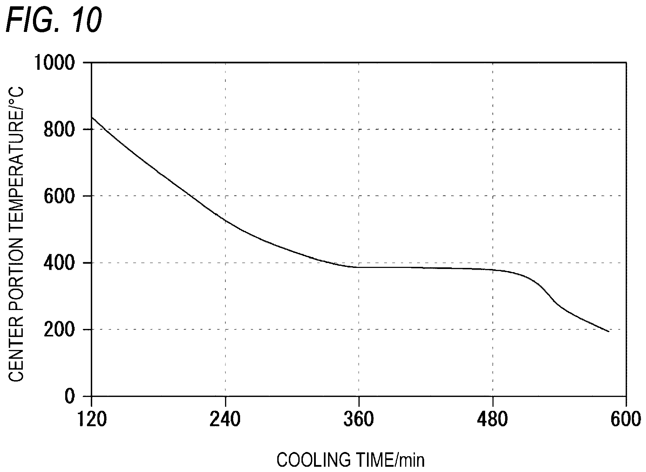

FIG. 10 shows quenching simulation of a 12.5-ton block of SKD61. At around 400°C, a significant delay in cooling due to transformation heat generation was predicted. When the steel in the related art is applied to a large mold, since large transformation heat generation occurs in addition to low quenchability, it is expected that the impact value becomes very low.

### 2. Verification Test of Phenomenon Actually Occurring in Mold: Examples 1 to 16 and Comparative Examples 1 to 6

### 2.1. Overview

An object of the present invention is to "provide a steel material for a mold having good manufacturability, and to provide a long-service life mold produced from the steel material". The "manufacturability" refers to SA property and machinability. The term "long-service life" means that a heat check is unlikely to occur and a large crack does not occur.

Another object of the present invention is to "achieve the above even when the mass and size of the steel material are both large".

In the following tests, the SA property, the machinability, the heat check, the large crack, the impact value, the creep rupture time, and the amount of retained austenite are verified. A heat treatment step simulating a large mold of 2000 kg or more is applied to a small material. Phenomenon actually occurring in a large mold are verified efficiently and accurately without using an expensive and large material which takes time for manufacturing.

### 2.2. Preparation of Test Piece

### 2.2.1. Preparation of Round Rod Material

Table 2 shows components of 22 types of steels (Examples 1 to 16 and Comparative Examples 1 to 6) used for verification.

Note that Comparative Example 1 is SKD61. Comparative Examples 2 to 4 are commercially available steels as improved steels of SKD61. Comparative Example 5 is a steel (C = 0.17 mass%, Mo = 0.51 mass%) having smaller contents of C and Mo than the steel according to the present invention. Comparative Example 6 is a steel having a larger content of V (V = 0.48 mass%) than the steel according to the present invention.

Each type of the steels in Table 2 was cast into an ingot of 150 kg, and a round rod material in an SA state having a diameter of 82 mm and a length of approximately 2900 mm was produced by the first step of the HT method.

The SA step was performed under appropriate conditions depending on the composition of the steel. The heating temperature of SA was 920°C in Comparative Example 1, 880°C in Comparative Examples 2 to 4, 900°C in Comparative Examples 5 to 6, and 900°C in Examples 1 to 16. After holding at the above heating temperature for 2 hours, the material was cooled to 650°C at 10°C/hour. Thereafter, the material was taken out from the heat treatment furnace and cooled.

**[Table 2]**

| | Composition (mass%) | | | | | | | | | | | | | |
|---|---|---|---|---|---|---|---|---|---|---|---|---|---|---|
| | C | Si | Mn | Cu | Ni | Cr | Mo | V | Al | N | Mn + Cr | Mn/Cr | Cu + Ni | Selective addition |
| Example 1 | 0.33 | 0.20 | 0.75 | 0.02 | 0.03 | 6.15 | 2.30 | 0.20 | 0.010 | 0.008 | 6.90 | 0.122 | 0.05 | |
| Example 2 | 0.37 | 0.40 | 0.90 | 0.15 | 0.25 | 6.40 | 2.50 | 0.30 | 0.030 | 0.025 | 7.30 | 0.141 | 0.40 | |
| Example 3 | 0.35 | 0.28 | 0.84 | 0.08 | 0.14 | 6.28 | 2.34 | 0.24 | 0.018 | 0.012 | 7.12 | 0.134 | 0.22 | |
| Example 4 | 0.31 | 0.38 | 0.87 | 0.42 | 0.41 | 6.16 | 2.75 | 0.29 | 0.002 | 0.003 | 7.03 | 0.141 | 0.83 | |
| Example 5 | 0.33 | 0.24 | 0.83 | 0.11 | 0.47 | 6.52 | 2.49 | 0.18 | 0.024 | 0.017 | 7.35 | 0.127 | 0.58 | |
| Example 6 | 0.39 | 0.01 | 0.76 | 0.51 | 0.11 | 5.94 | 2.83 | 0.03 | 0.048 | 0.016 | 6.70 | 0.128 | 0.62 | |
| Example 7 | 0.38 | 0.18 | 0.61 | 0.12 | 0.59 | 6.29 | 3.01 | 0.21 | 0.076 | 0.011 | 6.90 | 0.097 | 0.71 | |
| Example 8 | 0.24 | 0.39 | 0.89 | 0.03 | 0.74 | 5.98 | 2.78 | 0.13 | 0.064 | 0.020 | 6.87 | 0.149 | 0.77 | |
| Example 9 | 0.23 | 0.02 | 0.64 | 0.59 | 0.24 | 6.11 | 2.34 | 0.04 | 0.001 | 0.038 | 6.75 | 0.105 | 0.83 | |
| Example 10 | 0.27 | 0.05 | 0.65 | 0.28 | 0.37 | 6.50 | 3.25 | 0.08 | 0.005 | 0.021 | 7.15 | 0.100 | 0.65 | 1.78 W |
| Example 11 | 0.29 | 0.10 | 0.70 | 0.33 | 0.17 | 6.40 | 2.68 | 0.22 | 0.038 | 0.009 | 7.10 | 0.109 | 0.50 | 0.0019 B, 0.031 Ti |
| Example 12 | 0.31 | 0.15 | 0.74 | 0.01 | 0.08 | 6.30 | 3.16 | 0.12 | 0.015 | 0.032 | 7.04 | 0.117 | 0.09 | 0.96 Co |
| Example 13 | 0.33 | 0.21 | 0.78 | 0.05 | 0.41 | 6.35 | 2.11 | 0.17 | 0.057 | 0.005 | 7.13 | 0.123 | 0.46 | 0.024 Nb |
| Example 14 | 0.35 | 0.27 | 0.82 | 0.24 | 0.23 | 6.00 | 2.41 | 0.10 | 0.021 | 0.014 | 6.82 | 0.137 | 0.47 | 0.042 Ti |
| Example 15 | 0.36 | 0.31 | 0.70 | 0.29 | 0.02 | 6.04 | 3.12 | 0.26 | 0.046 | 0.018 | 6.74 | 0.116 | 0.31 | 0.021 S |
| Example 16 | 0.37 | 0.35 | 0.91 | 0.19 | 0.53 | 6.26 | 2.22 | 0.28 | 0.026 | 0.028 | 7.17 | 0.145 | 0.72 | 0.0012 Ca |
| Comparative Example 1 | 0.39 | 0.93 | 0.42 | 0.07 | 0.11 | 5.04 | 1.20 | 0.84 | 0.024 | 0.009 | 5.46 | 0.083 | 0.18 | |
| Comparative Example 2 | 0.36 | 0.50 | 0.71 | 0.06 | 0.12 | 5.52 | 1.24 | 0.58 | 0.019 | 0.019 | 6.23 | 0.129 | 0.18 | |
| Comparative Example 3 | 0.34 | 0.29 | 0.79 | 0.03 | 0.04 | 5.75 | 2.45 | 0.53 | 0.021 | 0.020 | 6.54 | 0.137 | 0.07 | |
| Comparative Example 4 | 0.34 | 0.28 | 1.13 | 0.02 | 0.03 | 5.54 | 2.51 | 0.59 | 0.023 | 0.016 | 6.67 | 0.204 | 0.05 | |
| Comparative Example 5 | 0.17 | 0.28 | 0.62 | 0.06 | 0.14 | 6.12 | 0.51 | 0.24 | 0.018 | 0.012 | 6.74 | 0.101 | 0.20 | |
| Comparative Example 6 | 0.39 | 0.39 | 0.88 | 0.08 | 0.09 | 6.46 | 2.34 | 0.48 | 0.019 | 0.011 | 7.34 | 0.136 | 0.17 | |

### 2.2.2. Preparation of Test Piece

The following test pieces were produced from the above-described round rod.
(A) SA property: test piece A having a size of 12 mm × 12 mm × 20 mm
(B) Machinability: test piece B having a size of 25 mm × 50 mm × 200 mm
(C) Heat check and sudden progress of crack: test piece C having a size of 72 mm in a diameter × 50 mm
(D) Impact value: test piece D having a size of 11 mm × 11 mm × 55 mm
(E) Creep rupture time: test piece E having a size of 18 mm in a diameter × 100 mm
(F) Amount of retained austenite: test piece F having a size of 10 mm in a diameter × 20 mm

The test pieces C, D, and E were thermally refined to 45 HRC by heat treatment, subjected to machining to be predetermined shapes, and then subjected to various evaluations. The other test pieces were directly used for various evaluations.

### 2.2.3. Thermal Refining of Test Piece

The thermal refining was performed in a vacuum furnace. The test pieces C, D, and E were heated at a quenching temperature for 2 hours, and then quenched in which the test pieces were cooled to 500°C at 6°C/min, and cooled from 500°C to 180°C at 0.5°C/min. At 180°C or lower, the test pieces C, D, and E were taken out of the furnace and cooled to 100°C or lower. In Comparative Examples 1 to 4, the quenching temperature was 1030°C, and the quenching temperature in other examples was 970°C. After quenching, the test pieces were thermally refined to 45 HRC by a plurality of times of tempering at 560°C to 600°C.

### 2.2.4. Machining of Test Pieces

The test pieces thermally refined to 45 HRC were subjected to machining to be a shape for properties evaluation.

A cylindrical test piece C2 having an outline of 70 mm in a diameter × 50 mm was produced from the test piece C. A V-notch was provided on one end surface of the cylinder. A depth of the notch was 1 mm, and an opening angle of the notch was 120°, and R at a tip of the notch was 0.4 mm.

An impact test piece D2 having an outline of 10 mm × 10 mm × 55 mm was produced from the test piece D. A U-notch was provided at a center in the longitudinal direction. The notch had a depth of 2.0 mm, and R of the notch tip was 1.0 mm.

A creep test piece E2 having a total length of 70 mm, a diameter of a parallel portion of 6 mm, and a length of the parallel portion of 30 mm was produced from the test piece E.

### 2.3. Test Method and Results

### 2.3.1 Evaluation of SA Property

An experiment simulating a manufacturing method from the hot working step in the "first step of the HT method" was performed on the test piece A in an SA state.

A vacuum furnace was used for the heat treatment. In order to simulate coarse austenite crystal grains during hot working, the test piece A was heated at 1240°C for 2 hours. In order to simulate grain boundary precipitation of a carbide or the like during cooling after hot working, the test piece was cooled from 1240°C to 650°C at 1°C/min. At 650°C or lower, nitrogen gas was introduced into the furnace so that the cooling was accelerated.

Since the phenomenon simulated by the heat treatment is grain boundary precipitation of coarse austenite crystal grains and a carbide, other conditions do not necessarily conform to an actual hot working step.

After the heat treatment simulating the hot working step, the normalizing step and the tempering step were performed, and SA was performed. The heating temperature of SA was the same as that in the production of the round rod material. On the other hand, the cooling rate from the heating temperature of SA was 23°C/hour. Softening to 98 HRB or less at this high cooling rate is industrially essential in terms of productivity and cost.

After being held at a predetermined temperature for 2 hours, the test piece was cooled to 650°C at 23°C/hour, and at 650°C or lower, nitrogen gas was introduced into the furnace to accelerate the cooling. After SA, the Rockwell B scale hardness was measured in accordance with JIS Z2245: 2016. Note that in Comparative Example 4, the Rockwell C scale hardness was also measured in accordance with JIS Z2245: 2016.

Table 3 shows the hardness after SA. In Table 3, "S" indicates that the hardness after SA is 98 HRB or less (SA property is good), and "D" indicates that the hardness after SA is more than 98 HRB (SA property is poor).

When the temperature reaches 650°C, in the case where untransformed austenite retains, the austenite is transformed into martensite or bainite by the subsequent accelerated cooling, and the hardness exceeds 98 HRB. Such a steel material is determined as having a poor SA property.

In Comparative Example 4, the Rockwell B scale hardness was determined as D and the Rockwell C scale hardness was determined as 29 HRC. It is considered that this is because Mn/Cr is as large as 0.204. On the other hand, other types of steels satisfying Mn/Cr ≤ 0.150 had a Rockwell B scale hardness of 98 HRB or less and exhibited a good SA property.

**[Table 3]**

| | HRB | HRC | Determination |
|---|---|---|---|
| Example 1 | 91 | | S |
| Example 2 | 93 | | S |
| Example 3 | 92 | | S |
| Example 4 | 94 | | S |
| Example 5 | 91 | | S |
| Example 6 | 89 | | S |
| Example 7 | 92 | | S |
| Example 8 | 95 | | S |
| Example 9 | 88 | | S |
| Example 10 | 89 | | S |
| Example 11 | 90 | | S |
| Example 12 | 90 | | S |
| Example 13 | 90 | | S |
| Example 14 | 91 | | S |
| Example 15 | 90 | | S |
| Example 16 | 96 | | S |
| Comparative Example 1 | 90 | | S |
| Comparative Example 2 | 89 | | S |
| Comparative Example 3 | 89 | | S |
| Comparative Example 4 | 98 < | 29 | D |
| Comparative Example 5 | 87 | | S |
| Comparative Example 6 | 90 | | S |

### 2.3.2. Evaluation of Machinability

The test piece B was cut. A cutting distance until a wear amount of a cutting tool reached 0.1 mm was defined as a tool service life. The tool service life corresponds to the machinability when the material for a mold in the SA state is roughly machined. A long cutting distance indicates that the tool service life is long and the machinability is good.

Table 4 shows the cutting distance [m]. Table 4 also shows a ratio of a cutting distance of each steel material (hereinafter also referred to as a "relative cutting distance") when the cutting distance 36.4 m of SKD61 (Comparative Example 1) is assumed as 100%. In Table 4, "S" indicates that the relative cutting distance is 90% or more, and "A" indicates that the relative cutting distance is 75% or more and less than 90%, and "B" indicates that the relative cutting distance is 50% or more and less than 75%, and "C" indicates that the relative cutting distance is 33% or more and less than 50%, and "D" indicates that the relative cutting distance is less than 33%.

SKD61 (Comparative Example 1) was very good in machinability. On the other hand, in the steel type determined as D, the machinability corresponds to being less than 1/3 of the SDK 61 and cannot be accepted industrially.

Among the 22 types of steels evaluated, there were no steel types determined as D. It is known that when the content of Si is small, the machinability deteriorates. Since there were no steel types having a content of Si of less than 0.01 mass% among the 22 types of steels, no steel types were determined as D.

Example 6 and Example 9 were determined as C, but had an industrially acceptable machinability. The content of Si in Example 6 was 0.01 mass%, and the content of Si in Example 9 was 0.02 mass%. In Example 10, the content of Si was 0.05 mass%, and the machinability was determined as B. From the above results, it can be said that when the content of Si is 0.03 mass% or more, there is almost no problem in machinability. In Examples 15 and 16, the machinability was determined as A or higher because a free-cutting component was included.

**[Table 4]**

| | Cutting distance | Relative cutting distance (%) | Determination |
|---|---|---|---|
| Example 1 | 222 | 61 | B |
| Example 2 | 24.8 | 68 | B |
| Example 3 | 237 | 65 | B |
| Example 4 | 25.8 | 71 | B |
| Example 5 | 226 | 62 | B |
| Example 6 | 131 | 36 | C |
| Example 7 | 20.7 | 57 | B |
| Example 8 | 266 | 73 | B |
| Example 9 | 149 | 41 | C |
| Example 10 | 189 | 52 | B |
| Example 11 | 20.4 | 56 | B |
| Example 12 | 21.5 | 59 | B |
| Example 13 | 23.3 | 64 | B |
| Example 14 | 25.5 | 70 | B |
| Example 15 | 34.9 | 96 | S |
| Example 16 | 288 | 79 | A |
| Comparative Example 1 | 36.4 | 100 | S |
| Comparative Example 2 | 30.2 | 83 | A |
| Comparative Example 3 | 25.1 | 69 | B |
| Comparative Example 4 | 25.8 | 71 | B |
| Comparative Example 5 | 24.4 | 67 | B |
| Comparative Example 6 | 24.0 | 66 | B |

### 2.3.3. Evaluation of Heat Check

A heat cycle was applied to the test piece C2, and progress of the generated heat check was evaluated. Heating to 580°C by high frequency and cooling to 90°C by jet water were repeated on an end surface provided in the notch. A combination of heating and cooling was defined as one cycle. In this evaluation, heating by a molten metal of a die casting mold and cooling by injection of a release agent were simulated. The notch is assumed to be a sharp corner portion serving as a stress concentration portion on a mold surface.

The test piece C2 subjected to 10 to 10000 heat cycles was cut at the center portion, and the crack at the notch bottom, that is, the depth of the heat check was measured. A graph with the heat cycle number on a horizontal axis and the crack depth on a vertical axis was created, and the heat cycle number at the crack depth of 0.2 mm was obtained by interpolation.

The crack depth of 0.2 mm is a condition under which transfer of a crack to a cast product starts to become apparent in die casting and a crack starts to appear in a dye penetrant test. A large heat cycle number at which the crack depth is 0.2 mm indicates that the generation and progress of the heat check are slow and the heat-check resistance is good.

Table 5 shows the cycle number when the crack depth was 0.2 mm. Table 5 also shows the ratio of the cycle number of each steel material (hereinafter also referred to as a "relative cycle number A") when 228 cycles of SKD61 (Comparative Example 1) are assumed as 100%. In Table 6, "S" represents that the relative cycle number A is more than 190%, and "A" represents that the relative cycle number A is more than 160% and 190% or less, and "B" represents that the relative cycle number A is more than 130% and 160% or less, and "C" represents that the relative cycle number A is more than 105% and 130% or less, and "D" represents that the relative cycle number A is 105% or less.

SKD61 (Comparative Example 1) had poor heat-check resistance and was determined as D. On the other hand, the improved steels of SKD61 (Comparative Examples 2 to 4) were determined as B and C because the heat-check resistance thereof was improved. Comparative Example 5 was poor in heat-check resistance and determined as D. It is considered that this is because the content of C was small and the content of Mo was small as compared with the steel according to the present invention, and therefore, the softening degree of the surface of the test piece by heating at 580°C during applying of the heat cycle was large, and the heat check was easily generated due to the decrease in strength.

The heat-check resistance of Examples 15 and 16 was determined as C, and the heat-check resistance was lower than those of the other Examples. It is considered that this is because the generation and progress of cracks were accelerated by compounds of the free-cutting component.

In other Examples, the heat-check resistance was as good as being determined as B or higher. Especially, in the three types of steels of Examples 6, 9, and 10, since the content of Si was 0.05 mass% or less, the heat-check resistance was determined as S, and it was found that the heat-check resistance of approximately two to three times that of SKD61 was stably exhibited. Examples in which Si = 0.10 mass% to 0.24 mass% were determined as A, and it was found that the heat-check resistance was close to twice that of SKD61.

**[Table 5]**

| | Heat cycle number | Relative cycle number A (%) | Determination |
|---|---|---|---|
| Example 1 | 374 | 164 | A |
| Example 2 | 335 | 147 | B |
| Example 3 | 351 | 154 | B |
| Example 4 | 321 | 141 | B |
| Example 5 | 368 | 161 | A |
| Example 6 | 633 | 278 | S |
| Example 7 | 401 | 176 | A |
| Example 8 | 312 | 137 | B |
| Example 9 | 556 | 244 | S |
| Example 10 | 442 | 194 | S |
| Example 11 | 407 | 179 | A |
| Example 12 | 386 | 169 | A |
| Example 13 | 356 | 156 | B |
| Example 14 | 326 | 143 | B |
| Example 15 | 257 | 113 | C |
| Example 16 | 289 | 127 | C |
| Comparative Example 1 | 228 | 100 | D |
| Comparative Example 2 | 275 | 121 | C |
| Comparative Example 3 | 330 | 145 | B |
| Comparative Example 4 | 321 | 141 | B |
| Comparative Example 5 | 235 | 103 | D |
| Comparative Example 6 | 345 | 151 | B |

### 2.3.4. Evaluation of Large Crack

In a die casting mold, when a crack progresses to a certain depth, a speed of the progress rapidly increases to cause a large crack. The same phenomenon was confirmed in the heat cycle test above. In a graph in which the heat cycle number was on a horizontal axis and the crack depth was on a vertical axis, a slope of the graph changes sharply at a certain heat cycle number. In a die casting mold, it is a phenomenon leading to a large crack. The heat cycle number at which the slope of the graph changes rapidly was obtained by interpolation, and the result was used as an index of a large crack. A large heat cycle number at which the slope of the graph changes rapidly indicates that the large crack hardly occurs.

Table 6 shows the heat cycle number at which the crack starts to rapidly progress. Table 6 also shows the ratio of the cycle number of each steel material (hereinafter also referred to as a "relative cycle number B") when 284 cycles of SKD61 (Comparative Example 1) are assumed as 100%. In Table 6, "S" represents that the relative cycle number B is more than 900%, and "A" represents that the relative cycle number B is more than 600% and 900% or less, and "B" represents that the relative cycle number B is more than 300% and 600% or less, and "C" represents that the relative cycle number B is more than 150% and 300% or less, and "D" represents that the relative cycle number B is 150% or less.

When a large mold is produced using SKD61 (Comparative Example 1), the mold is likely to have a large crack. Actually, the heat cycle number of SKD61 is as small as 284 cycles, which is less increased from 228 cycles in Table 5. This is because that the time from the start of the transfer of the generated heat check to the cast product to the large crack is short. In Comparative Example 2, the relative cycle number B is improved by 39% as compared with SKD61 (Comparative Example 1), but considering that variation in the mold service life due to the large crack is approximately 50%, it cannot be said that the improvement is remarkable.

When the heat cycle number at which the large crack occurs is stably close to twice, that is, when the relative cycle number B is 150% to 300%, it is determined that an improvement effect is clearly obtained. This condition was defined as being determined as C. All of Examples 1 to 16 were determined as exceeding C and being B or higher. In addition, only Example 15 was determined as B. Other examples were determined as A or higher, and the heat cycle number at which a large crack occurs was stably six times or more that of SKD61. Especially, the heat cycle number of Example which is determined as S exceeds ten times that of SKD61. In Examples 1 to 16, the rapid progress of cracks is prevented by low thermal stress due to high thermal conductivity and fineness of a structure due to high quenchability.

Comparative Example 5 determined as D in Table 5 was determined as A in the case of the large crack. It is considered that this is because the progress of cracks was prevented due to the high thermal conductivity and the high quenchability although the heat-check resistance was poor due to the large softening degree.

**[Table 6]**

| | Heat cycle number | Relative cycle number B (%) | Determination |
|---|---|---|---|
| Example 1 | 2417 | 851 | A |
| Example 2 | 1879 | 662 | A |
| Example 3 | 2113 | 744 | A |
| Example 4 | 2006 | 706 | A |
| Example 5 | 3831 | 1349 | S |
| Example 6 | 3642 | 1282 | S |
| Example 7 | 2332 | 821 | A |
| Example 8 | 1766 | 622 | A |
| Example 9 | 2551 | 898 | A |
| Example 10 | 4256 | 1499 | S |
| Example 11 | 4001 | 1409 | S |
| Example 12 | 2905 | 1023 | S |
| Example 13 | 3114 | 1096 | S |
| Example 14 | 2007 | 707 | A |
| Example 15 | 1218 | 429 | B |
| Example 16 | 2136 | 752 | A |
| Comparative Example 1 | 284 | 100 | D |
| Comparative Example 2 | 394 | 139 | D |
| Comparative Example 3 | 1644 | 579 | B |
| Comparative Example 4 | 1693 | 596 | B |
| Comparative Example 5 | 1983 | 698 | A |
| Comparative Example 6 | 2408 | 848 | A |

### 2.3.5. Evaluation of Impact Value

As for the impact value sensitive to the presence or absence of foreign matters and the density of structure, it is easy to easily determine whether the components, manufacturing method, or heat treatment is appropriate. Actually, a long-service life mold has a high impact value. Therefore, the impact value may be designated as an acceptance condition of a steel material for a mold or a mold.

An impact test was performed at room temperature using the test piece D2. A value obtained by dividing the absorption energy [J] by the cross-sectional area of the notch of 0.8 [cm²] is an impact value.

Each type of steel was evaluated by an average value often test pieces. Results are shown in Table 7. An absolute value of the impact value is more important than a ratio of the impact value to that of a certain type of steel. In Table 7, "S" represents that the impact value is more than 30 [J/cm²], and "A" represents that the impact value is more than 25 [J/cm²] and 30 [J/cm²] or less, and "B" represents that the impact value is more than 23 [J/cm²] and 25 [J/cm²] or less, and "C" represents that the impact value is more than 20 [J/cm²] and 23 [J/cm²] or less, and "D" represents that the impact value is 20 [J/cm²] or less.

When the impact value is 20 [J/cm²] or less, the mold is likely to have a large crack during use. The impact value required for a die casting mold is 25 [J/cm²] in a large mold targeted by the present invention. When the impact value is more than 30 [J/cm²], the risk of generating a large crack becomes very low. In each of Examples 1 to 16, the impact value was determined as B or higher.

In Comparative Example 5, the content of C and the content of Mo were smaller than those of the steel material according to the present invention, and the impact value thereof was determined as C. In Comparative Example 5, since the content of V was 0.30 mass% or less, the amount of foreign matters was small, and since the content of Mn + Cr was 6.70 mass% or more, the quenchability was also good. However, in Comparative Example 5, since the content of C was small and the transformation point was high, the structure was coarse. Therefore, the impact value of Comparative Example 5 was insufficient.

In Comparative Example 6, the content of V was larger than that of the steel material according to the present invention, and the impact value was determined as D. In Comparative Example 6, the content of Mn + Cr was 6.70 mass% or more, and the quenchability is high. However, in Comparative Example 6, the content of V was more than 0.30 mass%, and the amount of foreign matters was large, and good quenchability was not achieved.

The impact value in Comparative Examples 1 to 4 was determined as D. It is considered that this is because (a) the content of V exceeded 0.30 mass% and the amount of foreign matters was large, and (b) the content of Mn + Cr was less than 6.70 mass% and the quenchability was poor, and as a result, the structure became coarse.

Especially, in SKD61 (Comparative Example 1), since the content of V was the largest and the content of Mn + Cr was also small, the impact value was a very low value of 10 [J/cm²].

**[Table 7]**

| | Impact value | Determination |
|---|---|---|
| Example 1 | 30 | A |
| Example 2 | 29 | A |
| Example 3 | 30 | A |
| Example 4 | 29 | A |
| Example 5 | 32 | S |
| Example 6 | 31 | S |
| Example 7 | 28 | A |
| Example 8 | 26 | A |
| Example 9 | 27 | A |
| Example 10 | 31 | S |
| Example 11 | 32 | S |
| Example 12 | 32 | S |
| Example 13 | 32 | S |
| Example 14 | 28 | A |
| Example 15 | 25 | B |
| Example 16 | 27 | A |
| Comparative Example 1 | 10 | D |
| Comparative Example 2 | 12 | D |
| Comparative Example 3 | 16 | D |
| Comparative Example 4 | 16 | D |
| Comparative Example 5 | 22 | C |
| Comparative Example 6 | 19 | D |

### 2.3.6. Evaluation of Creep Rupture Time

A creep test was performed at 500°C using the test piece E2. The load was set to 1000 MPa. Each type of steel was evaluated by an average value of three test pieces. Results are shown in Table 8. Table 8 also shows a ratio of the creep rupture time of each steel material (hereinafter also referred to as a "relative rupture time") when 1.7 hours of SKD61 (Comparative Example 1) is assumed as 100%. In Table 8, "S" represents that the relative rupture time is more than 300%, and "A" represents that the relative rupture time is more than 250% and 300% or less, and "B" represents that the relative rupture time is more than 200% and 250% or less, and "C" represents that the relative rupture time is more than 150% and 200% or less, and "D" represents that the relative rupture time is 150% or less.

The rupture time of SKD61 (Comparative Example 1) was as short as 1.7 hours. It can be said that, in addition to the matters that a crack is likely to rapidly progress (see Table 6) and the impact value is low (see Table 7), a large crack is likely to generate from the viewpoint of creep in a large mold.

Comparative Example 2 was an improved steel of SKD61, but the rupture time thereof was the same as that of SKD61. The rupture time of Comparative Example 5 was only 65% of that of SKD61.

When the rupture time is stably close to twice, that is, 1.5 times or more that of SKD61, it is determined that there is an apparent improvement effect. This condition was defined as being determined as C. With respect to SKD61, a steel material in which the rupture time stably exceeded twice was defined as being determined as B. A steel material having a rupture time close to three times, that is, 2.5 times or more that of SKD61 has a remarkable improvement effect, and is defined as being determined as A. Further, a steel material having a rupture time of more than three times that of SKD61 was determined as S.

All of Examples 1 to 16 were determined as being higher than B and being A or higher. Moreover, only Example 13 and Example 16 were determined as A. All the other examples were determined as S.

The creep rupture time increases as the content of Mo increases. Since there was no steel of which the content of Mo was within the range of 1.25 mass% to 2.00 mass% among the 22 types of steels evaluated, none of the steels was determined as B or C.

**[Table 8]**

| | Rupture time | Relative rupture time (%) | Determination |
|---|---|---|---|
| Example 1 | 5.5 | 324 | S |
| Example 2 | 6.3 | 371 | S |
| Example 3 | 5.6 | 329 | S |
| Example 4 | 6.2 | 365 | S |
| Example 5 | 6.4 | 376 | S |
| Example 6 | 7.0 | 412 | S |
| Example 7 | 7.1 | 418 | S |
| Example 8 | 66 | 388 | S |
| Example 9 | 5.9 | 347 | S |
| Example 10 | 7.4 | 435 | S |
| Example 11 | 6.5 | 382 | S |
| Example 12 | 73 | 429 | S |
| Example 13 | 49 | 288 | A |
| Example 14 | 6.3 | 371 | S |
| Example 15 | 67 | 394 | S |
| Example 16 | 5.0 | 294 | A |
| Comparative Example 1 | 1.7 | 100 | D |
| Comparative Example 2 | 1.7 | 100 | D |
| Comparative Example 3 | 6.2 | 365 | S |
| Comparative Example 4 | 6.2 | 365 | S |
| Comparative Example 5 | 1.1 | 65 | D |
| Comparative Example 6 | 6.1 | 359 | S |

### 2.3.7. Evaluation of Retained Austenite

The test piece F was heated at the quenching temperature for 15 min, cooled to 500°C at 6°C/min, and cooled from 500°C to 180°C at 0.5°C/min. Thereafter, it was taken out from the furnace and cooled. In Comparative Examples 1 to 4, the quenching temperature was set to 1030°C, and the quenching temperatures of other Examples was set to 970°C. After quenching, the test piece F was cut in half in the vicinity of a center in the longitudinal direction, and the amount of retained austenite was measured at a cut surface having a diameter of 10 mm.

Table 9 shows the amount of retained austenite. As the quenchability was poor and the amount of Mo was smaller, the amount of retained austenite tended to increase. The amounts of retained austenite in Comparative Examples 1 to 5 were all 16% or more. In Comparative Example 6, the content of Mn + Cr was 6.70 mass% or more, and the quenchability was high, and the content of Mo was 2.00 mass% or more, and thus the amount of retained austenite was as low as 13%. In contrast, the amounts of retained austenite in Examples 1 to 16 were all 16% or less.

**[Table 9]**

| | Amount of residual austenite [%] |
|---|---|
| Example 1 | 14 |
| Example 2 | 13 |
| Example 3 | 12 |
| Example 4 | 10 |
| Example 5 | 12 |
| Example 6 | 11 |
| Example 7 | 9 |
| Example 8 | 11 |
| Example 9 | 12 |
| Example 10 | 9 |
| Example 11 | 12 |
| Example 12 | 8 |
| Example 13 | 16 |
| Example 14 | 14 |
| Example 15 | 8 |
| Example 16 | 15 |
| Comparative Example 1 | 21 |
| Comparative Example 2 | 19 |
| Comparative Example 3 | 16 |
| Comparative Example 4 | 16 |
| Comparative Example 5 | 20 |
| Comparative Example 6 | 13 |

### 2.3.8. Overview of Examples

Table 10 shows a list of six properties. In Comparative Example 1 (SKD61), since the SA property and the machinability were very high, the efficiency of manufacturing a mold was highest. On the other hand, the performance as a mold such as the heat check was insufficient.

Comparative Examples 2 to 4, which are improved steels of SKD61, are steels in which the machinability is reduced and the heat-check resistance is improved as compared with SKD61. However, there is no performance in being capable of stably preventing large cracks. Some elements included in Comparative Examples 5 and 6 are different from those of the steel material according to the present invention. Therefore, sufficient performance could not be exhibited in the heat check and large crack.

In contrast, Examples 1 to 16 were excellent in all properties. The amount of retained austenite affecting the impact value and creep rupture time was also small.

That is, it was found that the steel material according to the present invention is easy to manufacture a material for a mold or a mold, and a mold manufactured from this steel has a long service life.

**[Table 10]**

| | SA property | Machinability | Heat check | Large crack (crack progress) | Large crack (impact value) | Creep rupture | Notes |
|---|---|---|---|---|---|---|---|
| Example 1 | S | B | A | A | A | S | |
| Example 2 | S | B | B | A | A | S | |
| Example 3 | S | B | B | A | A | S | |
| Example 4 | S | B | B | A | A | S | |
| Example 5 | S | B | A | S | S | S | |
| Example 6 | S | C | S | S | S | S | 0.01 Si |
| Example 7 | S | B | A | A | A | S | |
| Example 8 | S | B | B | A | A | S | |
| Example 9 | S | C | S | A | A | S | 0.02 Si |
| Example 10 | S | B | S | S | S | S | |
| Example 11 | S | B | A | S | S | S | |
| Example 12 | S | B | A | S | S | S | |
| Example 13 | S | B | B | S | S | A | |
| Example 14 | S | B | B | A | A | S | |
| Example 15 | S | S | C | B | B | S | 0.021 S |
| Example 16 | S | A | C | A | A | A | |
| Comparative Example 1 | S | S | D | D | D | D | SKD61 |
| Comparative Example 2 | S | A | C | D | D | D | Improved steel of SKD61 (commercially available) |
| Comparative Example 3 | S | B | B | B | D | S | |
| Comparative Example 4 | D | B | B | B | D | S | |
| Comparative Example 5 | S | B | D | A | C | D | Low C content and low Mo content |
| Comparative Example 6 | S | B | B | A | D | S | High V content |

Although the embodiment of the present invention has been described in detail above, the present invention is not limited to the above embodiment, and various modifications can be made without departing from the gist of the present invention.

The present application is based on Japanese Patent Application No. 2023-082279 filed on May 18, 2023, and the contents thereof are incorporated herein by reference.

### INDUSTRIAL APPLICABILITY

The steel material according to the present invention can be used as a mold or a part thereof used in various manufacturing methods such as casting, forging, hot stamping, extrusion, injection molding, and blow molding.

In the steel material according to the present invention, since the contents of C and V are small, when the steel material is used as a powder, a bar material, or a wire material for additive manufacturing or welding repair, cracks of a shaped object or a welded portion can be avoided.

## Claims

1. A steel material comprising:
0.23 mass% ≤ C ≤ 0.39 mass%;
0.03 mass% ≤ V ≤ 0.30 mass%;
6.60 mass% ≤ Mn + Cr ≤ 7.40 mass%;
Mn/Cr ≤ 0.150;
Mn ≥ 0.60 mass%;
Cr ≤ 6.60 mass%;
Cu + Ni ≤ 0.84 mass%;
0.01 mass% ≤ Si ≤ 0.40 mass%;
2.00 mass% ≤ Mo ≤ 3.50 mass%;
0.001 mass% ≤ Al ≤ 0.080 mass%; and
0.003 mass% ≤ N ≤ 0.040 mass%,
with the balance being Fe and unavoidable impurities.

2. The steel material according to claim 1, further comprising:
at least one Group selected from the following Groups A to D:
Group A: at least one kind selected from 0.30 mass% < W ≤ 2.00 mass% and 0.30 mass% < Co ≤ 1.00 mass%,
Group B: 0.0002 mass% < B ≤ 0.0080 mass%,
Group C: at least one kind selected from 0.006 mass% < S ≤ 0.180 mass%, 0.0005 mass% < Ca ≤ 0.0500 mass%, 0.03 mass% < Se ≤ 0.50 mass%, 0.005 mass% < Te ≤ 0.100 mass%, 0.01 mass% < Bi ≤ 0.50 mass%, and 0.03 mass% < Pb ≤ 0.50 mass%,
Group D: at least one kind selected from 0.004 mass% < Nb ≤ 0.100 mass%, 0.004 mass% < Ta ≤ 0.100 mass%, 0.004 mass% < Ti ≤ 0.100 mass%, and 0.004 mass% < Zr ≤ 0.100 mass%.

3. The steel material according to claim 1 or 2, having a mass of 3000 kg or more, and having a minimum dimension (Lₘᵢₙ) of 300 mm or more among a dimension (L₁) in a longitudinal direction, a dimension (L₂) in a lateral direction, and a dimension (L₃) in a height direction.

4. A mold being manufactured from the steel material according to any one of claims 1 to 3 and having a mass of 2000 kg or more.

5. Use of the steel material according to any one of claims 1 to 3, for the mold according to claim 4.

6. The use of claim 5, comprising manufacturing the mold including the steps of
a) a first step of melting a raw material blend, refining the molten material, and casting the molten metal into a die;
b) a second step of subjecting an ingot to homogenization treatment; and
c) a third step of subjecting the ingot after the homogenization treatment to hot working.

7. Use of the mold according to claim 4, or as manufactured according to the use according to claim 5 or 6, for casting, forging, hot stamping, extrusion, injection molding, or blow molding.

8. Use of the steel material according to any one of claims 1 to 3, as a powder, a bar material, or a wire material, for additive manufacturing or welding repair.
